# EUROPEAN PATENT APPLICATION

(11) **EP 4 546 737 A1**
(43) Date of publication of application: **30.04.2025**
(21) Application number: 23847040.5
(22) Date of filing: 28.07.2023
(51) Int. Cl.: H04L 41/0894, H04W 8/24, H04W 60/04, H04W 88/14, H04W 88/16

(54) **METHOD AND APPARATUS FOR PROVIDING UE POLICY IN WIRELESS COMMUNICATION SYSTEM**

(30) Priority: 28.07.2022 KR 20220093951
(71) Applicant: Samsung Electronics Co., Ltd., Suwon-si, Gyeonggi-do 16677 (KR)
(72) Inventor: KIM, Dongyeon, Suwon-si, Gyeonggi-do 16677 (KR); PARK, Jungshin, Suwon-si, Gyeonggi-do 16677 (KR); LEE, Jicheol, Suwon-si, Gyeonggi-do 16677 (KR)
(74) Representative: HGF
(86) International application number: PCT/KR2023/011035
(87) International publication number: WO 2024/025384

(57) **Abstract**

The present disclosure relates to a 5G or 6G communication system for supporting a higher data transmission rate. Provided is a method performed by a first network entity that performs a session management function (SMF) and a packet data network gateway-control plane function (PGW-C) of a mobile communication system. The method comprises the steps of: acquiring, from a user equipment (UE), an indicator indicating a UE route selection policy (URSP) provisioning support in an evolved packet system (EPS);transmitting, based on the indicator, a session management (SM) policy control update request message to a second network entity that performs a policy control function (PCF) related to a session; and receiving, from the second network entity, an SM policy control update response message including URSP information generated by a third network entity that performs a PCF related to the UE.

## Description

### [Technical Field]

The disclosure relates to a method and an apparatus for providing a UE policy in a wireless communication system or a mobile communication system. More specifically, the disclosure relates to a method and an apparatus for providing a UE policy in a complex mobile communication system having different communication protocols.

### [Background Art]

5G mobile communication technologies define broad frequency bands to enable high transmission rates and new services, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure]

### [Technical Problem]

The 5G system (5GS) that has recently been commercialized and the long-term evolution (LTE) and LTE-advanced (LTE-A) systems currently providing mobile communication services are all mobile communication systems that provide packet-based services. These 5GS are being developed to support interworking with the evolved packet system (EPS) based on LTE and LTE-A. In the 5G system, the 5G core network may provide a UE policy to a UE.

In the current 5G system, when a UE capable of using wireless communication through the 5GS and EPS is connected to a network through the 5GS supporting EPS/5GS interworking and then moves the network connection to the EPS, the 5G core network no longer provides a new UE policy to the UE, and the UE communicates with the network based on the UE policy provided by a 5G core network before moving to the EPS.

In the current 5G system, when a change occurs in the UE policy and/or information related to the UE policy in the 5G core network after the EPS/5GS interworking UE moves from the 5GS to the EPS, the changed UE policy cannot be provided to the UE through an EPS entity.

Therefore, the disclosure provides a method and apparatus in which a core network provides a UE policy to a UE when the UE moves from the 5GS to the EPS in a 5G system supporting EPS/5GS interworking.

### [Technical Solution]

According to an embodiment of the disclosure, a method performed by a first network entity that performs a session management function (SMF) and a packet data network gateway-control plane function (PGW-C) in a mobile communication system is provided. The method includes acquiring, from a user equipment (UE), an indicator indicating a UE route selection policy (URSP) provisioning support in an evolved packet system (EPS), transmitting, based on the indicator, a session management (SM) policy control update request message to a second network entity that performs a policy control function (PCF) related to a session, and receiving, from the second network entity, an SM policy control update response message including URSP information generated by a third network entity that performs a PCF related to the UE.

According to an embodiment of the disclosure, a method performed by a second network entity that performs a policy control function (PCF) related to a session in a mobile communication system is provided. The method includes receiving a session management (SM) policy control update request message from a first network entity that performs a session management function (SMF) and a packet data network gateway-control plane function (PGW-C), in case that a user equipment (UE) route selection policy (URSP) provisioning is supported in an evolved packet system (EPS), establishing a UE policy association with a third network entity that performs a PCF related to the UE, and transmitting, to the first network entity, an SM policy control update response message including URSP information generated by the third network entity.

According to an embodiment of the disclosure, a first network entity that performs a session management function (SMF) and a packet data network gateway-control plane function (PGW-C) in a mobile communication system is provided. The first network entity includes a transceiver and a controller coupled to the transceiver. The controller is configured to acquire, from a user equipment (UE), an indicator indicating a UE route selection policy (URSP) provisioning support in an evolved packet system (EPS), control the transceiver to transmit, based on the indicator, a session management (SM) policy control update request message to a second network entity that performs a policy control function (PCF) related to a session, and control the transceiver to receive, from the second network entity, an SM policy control update response message including URSP information generated by a third network entity that performs a PCF related to the UE.

According to an embodiment of the disclosure, a second network entity that performs a policy control function (PCF) related to a session in a mobile communication system is provided. The second network entity includes a transceiver and a controller coupled to the transceiver. The controller is configured to control the transceiver to receive a session management (SM) policy control update request message from a first network entity that performs a session management function (SMF) and a packet data network gateway-control plane function (PGW-C), in case that a user equipment (UE) route selection policy (URSP) provisioning is supported in an evolved packet system (EPS), establish a UE policy association with a third network entity that performs a PCF related to the UE, and control the transceiver to transmit, to the first network entity, an SM policy control update response message including URSP information generated by the third network entity.

### [Advantageous Effects]

According to an embodiment of the disclosure, in a 5G system supporting EPS/5GS interworking, the core network can provide a UE policy to a UE when the UE moves from the 5GS to the EPS.

According to an embodiment of the disclosure, when a change in the UE policy occurs in the core network while the UE is connected to the EPS, the UE may receive the changed UE policy without having to move to 5GS again, thereby reducing resource waste and preventing incorrect network access to improve communication stability.

In addition, advantageous effects obtainable from the disclosure may not be limited to the above - mentioned effects, and other effects which are not mentioned may be clearly understood from the following descriptions by those skilled in the art to which the disclosure pertains.

### [Description of Drawings]

FIG. 1 illustrates a network structure and interfaces of a 5G system according to an embodiment of the disclosure;
FIG. 2 illustrates a network structure and interfaces of an EPS/5GS interworking system according to an embodiment of the disclosure;
FIG. 3 illustrates a network structure and interfaces related to a policy control and rate control system of a 5G system according to an embodiment of the disclosure;
FIG. 4 illustrates a method in which a core network transfers a UE policy to a UE in an EPS/5GS interworking system according to an embodiment of the disclosure;
FIG. 5 illustrates a method in which a core network transfers a UE policy to a UE in an EPS/5GS interworking system according to an embodiment of the disclosure;
FIG. 6 illustrates the structure of SMF+PGW-C according to embodiments of the disclosure.
FIG. 7 illustrates the structure of a PCF according to embodiments of the disclosure.
FIG. 8 illustrates a method in which a core network transfers a UE policy to a UE in an EPS/5GS interworking system according to an embodiment of the disclosure;
FIG. 9A is a sequence diagram illustrating a method in which a core network transfers a UE policy to a UE in an EPS/5GS interworking system according to an embodiment of the disclosure;
FIG. 9B is a sequence diagram illustrating a method in which a core network transfers a UE policy to a UE in an EPS/5GS interworking system according to an embodiment of the disclosure;
FIG. 9C is a sequence diagram illustrating a method in which the core network transmits a UE policy to a UE in an EPS/5GS interworking system according to an embodiment of the disclosure;
FIG. 9D is a sequence diagram illustrating a method in which the core network transmits a UE policy to a UE in an EPS/5GS interworking system according to an embodiment of the disclosure;
FIG. 9E is a sequence diagram illustrating a method for the core network to deliver a UE policy to a UE in an EPS/5GS interworking system according to an embodiment of the disclosure;
FIG. 9F is a sequence diagram illustrating a method in which the core network transmits a UE policy to a UE in an EPS/5GS interworking system according to an embodiment of the disclosure; FIG. 10 illustrates a method in which a core network transfers a UE policy to a UE in an EPS/5GS interworking system according to an embodiment of the disclosure;
FIG. 11A is a sequence diagram illustrating a method in which a core network transfers a UE policy to a UE in an EPS/5GS interworking system according to an embodiment of the disclosure;
FIG. 11B is a sequence diagram illustrating a method in which a core network transfers a UE policy to a UE in an EPS/5GS interworking system according to an embodiment of the disclosure;
FIG. 11C is a sequence diagram illustrating a method in which the core network transmits a UE policy to a UE in an EPS/5GS interworking system according to an embodiment of the disclosure;
FIG. 11D is a sequence diagram illustrating a method in which the core network transmits a UE policy to a UE in an EPS/5GS interworking system according to an embodiment of the disclosure;
FIG. 11E is a sequence diagram illustrating a method in which a core network transfers a UE policy to a UE in an EPS/5GS interworking system according to an embodiment of the disclosure;
FIG. 11F is a sequence diagram illustrating a method in which the core network transmits a UE policy to a UE in an EPS/5GS interworking system according to an embodiment of the disclosure;
FIG. 12 illustrates a method in which a core network transfers a UE policy to a UE in an EPS/5GS interworking system according to an embodiment of the disclosure;
FIG. 13A is a sequence diagram illustrating a method in which a core network transfers a UE policy to a UE in an EPS/5GS interworking system according to an embodiment of the disclosure;
FIG. 13B is a sequence diagram illustrating a method in which a core network transfers a UE policy to a UE in an EPS/5GS interworking system according to an embodiment of the disclosure;
FIG. 13C is a sequence diagram illustrating a method in which a core network transfers a UE policy to a UE in an EPS/5GS interworking system according to an embodiment of the disclosure;
FIG. 13D is a sequence diagram illustrating a method in which a core network transfers a UE policy to a UE in an EPS/5GS interworking system according to an embodiment of the disclosure;
FIG. 13E is a sequence diagram illustrating a method in which the core network transmits a UE policy to a UE in an EPS/5GS interworking system according to an embodiment of the disclosure;
FIG. 13F is a sequence diagram illustrating a method in which the core network transmits a UE policy to a UE in an EPS/5GS interworking system according to an embodiment of the disclosure; and
FIG. 13G is a sequence diagram illustrating a method in which a core network transfers a UE policy to a UE in an EPS/5GS interworking system according to an embodiment of the disclosure.

### [Mode for Invention]

In describing embodiments in the specification, descriptions related to technical contents well-known in the art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card.

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the accompanying drawings of the disclosure are provided to assist in understanding the disclosure, and the disclosure is not limited by the shapes or arrangements illustrated in the drawings. In addition, a detailed description of known functions or configurations that may make the subject matter of the disclosure unclear will be omitted. It should be noted that, in the following description, only parts required to understand operations according to various embodiments will be described and a description of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may be easily applied to other communication systems through modifications.

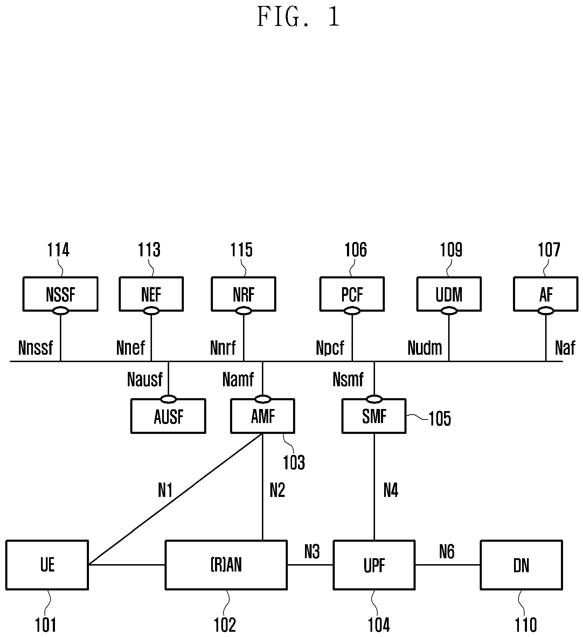

FIG. 1 illustrates a network structure and interfaces of a 5G system according to an embodiment of the disclosure.

A network entity included in the network structure of the 5G system of FIG. 1 may include a network function (NF) according to system implementation.

Referring to FIG. 1, the network structure of the 5G system may include various network entities. For example, the 5G system may include an authentication server function (AUSF) 108, a (core) access and mobility management function (AMF) 103, a session management function (SMF) 105, a policy control function (PCF) 106, an application function (AF) 107, a unified data management (UDM) 109, a data network (DN) 110, a network exposure function (NEF) 113, a network slicing selection function (NSSF) 114, an edge application service domain repository (EDR) 113, an edge application server (EAS) (not illustrated), an EAS discovery function (EASDF) (not illustrated), a user plane function (UPF) 104, a radio access network ((R)AN) 102, and a user equipment (UE) (or terminal) 101.

Each NF of the 5G system 100 may support the following functions.

The AUSF 108 may process and store data for authentication of the UE 101.

The AMF 103 may provide a function for access and mobility management in units of UEs, and one UE may be basically connected to one AMF. Specifically, the AMF 103 may support functions such as inter-CN node signaling for mobility between 3GPP access networks, termination of a radio access network (RAN) CP interface (i.e., an N2 interface), a termination (N1) of non-access stratum (NAS) signaling, NAS signaling security (e.g., NAS ciphering and integrity protection), AS security control, registration management (e.g., registration area management), connection management, idle mode UE reachability (including control and execution of paging retransmission), mobility management control (e.g., subscription and policies), support of intra-system mobility and inter-system mobility, support of network slicing, the SMF selection, lawful interception (e.g., for an AMF event and an interface for an LI system), providing of transport of session management (SM) messages between the UE and the SMF, a transparent proxy for routing SM messages, access authentication, access authorization including a roaming right check, providing of transport of SMS messages between the UE and the SMSF, a security anchor function (SAF), and/or a security context management (SCM). Some or all functions of the AMF 103 may be supported in a single instance of one AMF.

The DN 110 may include an operator service, an Internet access, or 3rd party service, etc. The DN 110 may transmit a downlink protocol data unit (PDU) to the UPF 104, or receive a PDU, which has been transmitted from the UE 101, from the UPF 104.

The PCF 106 may receive information on a packet flow from an application server, to provide a function of determining a policy such as mobility management, SM, etc. Specifically, the PCF 106 may support a function, such as support of a unified policy framework for controlling network operation, providing of a policy rule to enable control plane function(s) (e.g., the AMF or the SMF) to execute the policy rule, and implementation of a front end for accessing relevant subscription information for policy determination in a user data repository (UDR).

The SMF 105 may provide a session management function and, when the UE has multiple sessions, the sessions may be managed by different SMFs. Specifically, the SMF 105 supports a function, such as session management (e.g., session establishment, modification, and release, including tunnel maintenance between the nodes of the UPF 104 and the (R)AN 102), UE IP address allocation and management (including selective authentication), selection and control of a UP function, configuration of traffic steering at the UPF 104 to route traffic to a proper destination, termination of interfaces towards policy control functions, execution of a control part of a policy and a quality of service (QoS), lawful interception (e.g., relating to an SM event and an interface to an LI system), termination of SM parts of NAS messages, downlink data notification, an initiator of AN-specific SM information (this is transferred to the (R)AN 102 through N2 via the AMF 103), determination of an SSC mode of a session, and a roaming function. Some or all functions of the SMF 105 may be supported in a single instance of one SMF.

The UDM 109 may store user subscription data, policy data, etc. The UDM 109 may include two parts, i.e., an application front end (FE) (not shown) and a user data repository (UDR) (not shown).

The FE may include a UDM FE in charge of location management, subscription management, and credential processing, and the PCF in charge of policy control. The UDR may store data required for functions provided by the UDM-FE, and a policy profile required by the PCF. The data stored in the UDR may include a subscription identifier, a security credential, user subscription data including access and mobility-related subscription data and session-related subscription data, and policy data. The UDM-FE may access subscription information stored in the UDR, and may support a function such as authentication credential processing, user identification handling, access authentication, registration/mobility management, subscription management, and SMS management.

The UPF 104 may transfer a downlink PDU received from the DN 110 to the UE 101 via the (R)AN 102, and may transfer, to the DN 110, an uplink PDU received from the UE 101 via the (R)AN 102. Specifically, the UPF 104 may support a function, such as an anchor point for intra/inter-RAT mobility, an external PDU session point of interconnection to a data network (DN), packet routing and forwarding, packet inspection and a user plane part of policy rule enforcement, lawful interception, traffic usage reporting, an uplink classifier for supporting to route traffic flows to a data network, a branching point for supporting a multi-homed PDU session, QoS handling for a user plane (e.g., packet filtering, gating, and uplink/downlink rate enforcement), uplink traffic verification (e.g., a service data flow (SDF) mapping between an SDF and a QoS flow), transport level packet marking in uplink and downlink, and a downlink packet buffering and downlink data notification triggering function. Some or all functions of the UPF 104 may be supported in a single instance of one UPF.

The AF 107 may interact with a 3GPP core network for service providing (e.g., supporting of a function, such as application influence on traffic routing, access to network capability exposure, and interaction with a policy framework for policy control).

The (R)AN 102 is a generic term for a new radio access network supporting both an evolved E-UTRA that is an evolved version of a 4G radio access technology, and a new radio access technology (NR) (e.g., a gNB).

The gNB may support a function, such as functions for radio resource management (i.e., radio bearer control, radio admission control, connection mobility control, and dynamic allocation of resources to the UE in uplink/downlink (i.e., scheduling)), Internet protocol (IP) header compression, encryption and integrity protection of a user data stream, selection of the AMF at UE attachment when no routing towards the AMF is determined through information provided by the UE, routing of user plane data to the UPF(s), routing of control plane information to the AMF, connection setup and release, scheduling and transmission of paging messages (e.g., generated from the AMF), scheduling and transmission of system broadcast information (system broadcast information generated from the AMF or operating and maintenance (O&M)), measurement and measurement reporting configuration for mobility and scheduling, transport level packet marking in uplink, session management, support of network slicing, QoS flow management and mapping to a data radio bearer, support of the UE in an inactive mode, a NAS message distribution function, a NAS node selection function, sharing of a radio access network, dual connectivity, and tight interworking between NR and E-UTRA.

The UE 101 may refer to a user device. For example, the user device may be referred to as a terminal, a mobile equipment (ME), and a mobile station (MS). In addition, the user device may be a portable device, such as a notebook, a mobile phone, a personal digital assistant (PDA), a smartphone, or a multimedia device, or may be an unportable device such as a personal computer (PC) or a vehicle-mounted device.

The NEF 111 may provide a functionality for securely exposing services and capabilities provided by 3GPP network functions, e.g., for a 3rd party, internal exposure/re-exposure, application functions, and edge computing. The NEF 111 may receive information (based on exposed capability(s) of other NF(s)) from the other NF(s). The NEF 111 may store received information as structured data by using a standardized interface as a data storage network function. The stored information may be re-exposed to other NF(s) and AF(s) by the NEF 111, and may be used for other purposes such as analysis.

The NRF 115 may support a service discovery function. The NRF may receive an NF discovery request from an NF instance, and provide information of discovered NF instances to the NF instance. In addition, the NRF may maintain available NF instances and services supported thereby.

While a reference model for the case in which the UE 101 accesses the one DN 110 by using one PDU session is illustrated in FIG. 1 as an example for convenience of explanation, but the disclosure is not limited thereto.

The UE 101 may concurrently access two (i.e., local and central) data networks by using multiple PDU sessions. In this case, two SMFs 105 may be selected for different PDU sessions. Each SMF may be capable of controlling both a local UPF and a central UPF in a PDU session.

In addition, the UE 101 may simultaneously access two (i.e., local and central) data networks provided within a single PDU session.

The NSSF 114 may select a set of network slice instances serving the UE 101. In addition, the NSSF 114 may determine allowed network slice selection assistance information (NSSAI) and, if necessary, may map the same to pieces of subscribed single-network slice selection assistance information (S-NSSAIs). In addition, the NSSF 114 may determine configured NSSAI and, if necessary, map same to subscribed S-NSSAIs. In addition, the NSSF 114 may determine an AMF set used to serve the UE, or query the NRF 115 according to a configuration to determine a list of candidate AMFs.

The NRF 115 may support a service discovery function. The NRF may receive an NF discovery request from an NF instance, and provide information of discovered NF instances to the NF instance. In addition, the NRF may maintain available NF instances and services supported thereby.

In a 3GPP system, a conceptual link connecting NFs in a 5G system may be defined as a reference point. The following is an example of reference point(s) included in the 5G system architecture illustrated in FIG. 1.
N1: A reference point between the UE and the AMF
N2: A reference point between the (R)AN and the AMF
N3: A reference point between the (R)AN and the UPF
N4: A reference point between the SMF and the UPF
N5: A reference point between the PCF and the AF
N6: A reference point between the UPF and the data network
N7: A reference point between the SMF and the PCF
N8: A reference point between the UDM and the AMF
N9: A reference point between two core UPFs
N10: A reference point between the UDM and the SMF
N11: A reference point between the AMF and the SMF
N12: A reference point between the AMF and the AUSF
N13: A reference point between the UDM and the authentication server function (AUSF)
N14: A reference point between two AMFs
N15: In case of a non-roaming scenario, a reference point between the PCF and the AMF, and in case of a roaming scenario, a reference point between the AMF and the PCF in a visited network

In the following description, a terminal may refer to the UE 101, and the terms of UE and terminal may be used interchangeably. In this case, unless the terminal is specifically defined additionally, it should be understood as the UE 101.

Table 1 below shows an example of a UE route selection policy (URSP) rule.

**[Table 1]**

| **URSP Rules** | | | | | | | |
|---|---|---|---|---|---|---|---|
| **P** | **Traffic Descriptor (TD)** | **P** | **Route Selection Component (RSC)** | | | | |
| | **APPID, DNN, IP, FQDN, CC** | | **S-NSSAI** | **DNN** | **SSC Mode** | **PDU-Type** | **Access-Type** |
| 1 | App#1 | 1 | S-NSSAI #1 | DNN#1 | SSC#3 | IPv4 | 3GPP |
| 2 | App#2 | 1 | S-NSSAI #2 | DNN#2 | SSC#1 | IPv4/v6 | 3GPP |
| | | 2 | S-NSSAI #2 | DNN#2 | - | - | Non-3GP P |
| 4 | App#1, CC=interne t, supl | 1 | S-NSSAI #1 | DNN#1 | - | - | Non-3GP P |
| 5 | App#3, CC=ims | 1 | S-NSSAI #3 | DNN#3 | - | - | Multi-Access |
| 6 | App#1 | 1 | S-NSSAI #1 | DNN#1 | - | - | Multi-Access |
| 7 | * (match all) | 1 | S-NSSAI #4 | DNN#4 | SSC#3 | - | - |

In 5GC, the PCF may provide policy information to the UE, and the UE policy information may include the URSP.

The URSP is used by the UE to determine whether an application detected by the UE can be associated to an established PDU session, can be offload to non-3GPP access outside a PDU session, can be routed via a ProSe Layer-3 UE-to-network relay outside the PDU session, or whether a new PDU session can be established and associated therewith. The URSP may include one or more URSP rules, and one URSP rule may include one traffic descriptor and one or more route selection components (RSC).

Traffic descriptor (TD) may include matching criteria that may identify an application detected by the UE or traffic of the application. Specific examples are as follows.

Application descriptor: this indicates information that may refer to the application of the UE. For example, the application descriptor may include an APPID consisting of OSID and OSAPPID.

IP descriptor: this displays an IP address indicating a destination address of an IP packet transmitted by the UE. This may include IP 3-tuple, that is, IP destination address, port number, and protocol.

Domain descriptor: this expresses the destination address of a server to which the UE connects in the fully qualified domain name (FQDN) format.

Non-IP descriptor: this indicates information that may specify the recipient of non-IP data.

### DNN: Data network name

Connection capability (CC): this corresponds to type information that may specify the characteristics of connected traffic, and may have values such as IP multimedia subsystem (IMS), multimedia message service (MMS), and Internet.

Route selection component (RSC) may include PDU session attribute information to determine a PDU session with which an application or application traffic is associated when a traffic descriptor that may identify the application detected by the UE is specified. Specific examples are as follows.

SSC Mode Selection: this is an element that designates session and service continuity and may have values such as SSC mode 1, SSC mode 2, and SSC mode 3.

Network Slice Selection: this is information that may designate a network slice.

### DNN Selection: Data network name

PDU Session Type Selection: This is an element that may designate the type of PDU-session capable of designating IPv4, IPv6, IPv4v6, Ethernet, or Non-IP.

Non-Seamless Offload indication: this indicates that application traffic may be offloaded through non-3GPP access outside the PDU session.

ProSe Layer-3 UE-to-Network Relay Offload indication: this indicates that application traffic may be offloaded through the ProSe Layer-3 UE-to-Network Relay outside the PDU session.

Access Type preference: this is an element that refers to whether a PDU session is a PDU session connected through 3GPP access, a session connected through non-3GPP access, or a session supporting multi-access connection using both 3GPP access and non-3GPP access.

PDU Session Pair ID: this is an element that refers to an identifier by which application traffic is shared in a redundant PDU session.

Redundancy sequence number (RSN): this is an element that refers to an identifier used during redundant transmission.

A plurality of URSP rules may be divided within a policy section (PS) of a UE policy container. In an embodiment of the disclosure, the plurality of URSP rules may be divided into a plurality of policy sections so as not to be exceed a maximum allowed transmission size of an NAS layer. One URSP rule may not be divided into two PSs. One complete URSP rule may need to be included in one policy section.

The URSP rules have priority for each rule. According to an embodiment of the disclosure, each of the URSP rules may include a URSP rule identifier capable of identifying the URSP rules. More specifically, the URSP rule identifier may refer to traffic parameters through which a UE may identify a UE application.

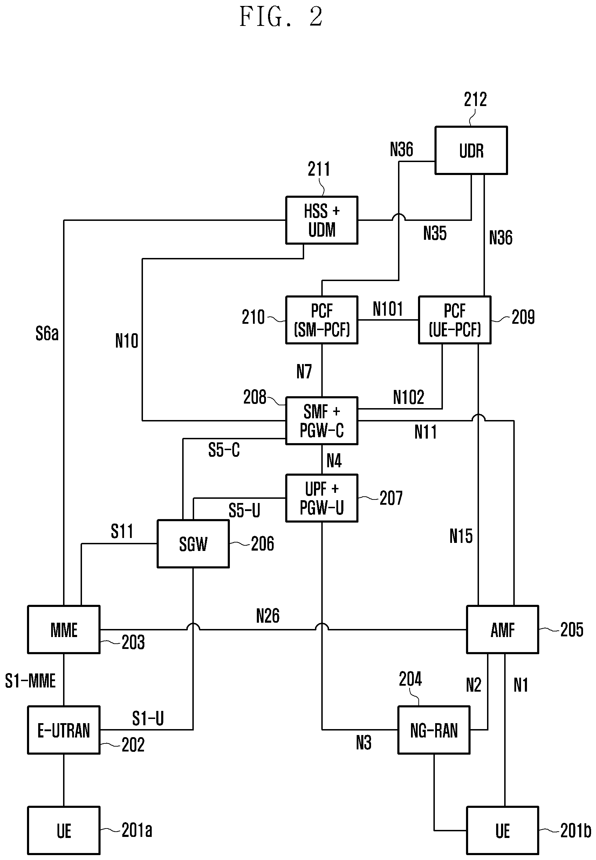

FIG. 2 illustrates a network structure and interfaces of an EPS/5GS interworking system according to an embodiment of the disclosure.

The 5GS may include a new radio (NR) base station (NG- radio access node (RAN) or next generation node B (gNB)) 204 for wireless access of a UE 201b, and an access and mobility management function (AMF) 205. In addition, the 5GS may include a session management function (SMF), a user plane function (UPF), a policy control function (PCF), a network slice selection function (NSSF), a unified data management (UDM), a unified data repository (UDR), etc., which are not illustrated in FIG. 2.

The EPS may include an E-UTRA base station (evolved universal mobile telecommunications system (evolved UMTS terrestrial radio access network (E-UTRAN) or evolved node B (eNB)) 202 for wireless access of a UE 201a, a mobility management entity (MME) 203, a serving gateway (SGW) 206, a packet data network gateway (PGW) (the PGW may include a PGW-U and a PGW-C), a policy and charging rule function (PCRF), a home subscriber server (HSS), etc.

According to an embodiment, the AMF and the MME may be network functions (NF) that manage radio network access and mobility for the UE. The SMF, SGW, and PGW are NFs that manage a session for the UE, and session information may include quality of service (QoS) information, charging information, and packet processing information. The UPF and the PGW are NFs that process user plane traffic (e.g., User Plane traffic), and may be controlled by the SMF and the SGW. The PCF and the PCRF may be NFs that manage an operator policy and/or a PLMN policy for providing a service in a wireless communication system. In addition, the PCF may be divided into a PCF in charge of an access and mobility (AM) policy and a UE policy, and a PCF in charge of a session management (SM) policy. The PCF in charge of the AM/UE policy and the PCF in charge of the SM policy may be logically or physically separated NFs or logically and physically one NF. The UDM and the HSS may be NFs that store and manage UE subscription information. The UDR may be an NF or database (DB) that stores and manages data. The UDR 212 may store subscription information of the UE and provide subscription information of the UE to the UDM. Further, the UDR 212 may store operator policy information and provide operator policy information to the PCF. The NSSF may be an NF that performs a function of selecting network slice instances serving the UE or determining network slice selection assistance information (NSSAI).

The instance may refer to a state in which an NF exists in the form of a software code and is executable by being assigned a physical or/and logical resource from a physical computing system (e.g., a specific computing system existing on a core network) to perform the function of the NF. For example, an AMF instance, an SMF instance, an NSSF instance, etc. may refer to a state in which physical and/or logical resources can be allocated and used from a specific computing system existing on a core network for the operations of the AMF, SMF, NSSF, etc. Accordingly, an AMF instance, an SMF instance, an NSSF instance that use physical and/or logical resources allocated from a specific computing system existing on a network for the operations of the AMF, SMF, NSSF may perform the same operation as a case in which a physical AMF, SMF, NSSF device exists.

The UDM of 5GS and the HSS of EPS may be configured as one combo node (referred to as UDM+HSS) 211. The UDM+HSS node 211 may store subscriber information of the UE. The SMF of the 5GS and the PGW-C of the EPS may be configured by one combo node (referred to as SMF+PGW-C) 208. The PCF of 5GS and the policy control and charging rules function (PCRF) of EPS may be configured as one combo node (referred to as PCF+PCRF). The UPF of 5GS and the PGW-U of EPS may be configured as one combo node (referred to as UPF+PGW-C) 207. The UE may access the MME of EPS through the E-UTRA base station to use an EPS network service. Further, the UE may access the AMF of 5GS through the NR base station to use a 5GS network service. In FIG. 2, the same reference numeral is used for a UE connected to the EPS and a UE connected to the 5GS. This is to indicate that the UE can be connected to the EPS or can be connected to the 5GS.

As described above, one NF or network entity may simultaneously support different network systems, and such an NF, network node, or network entity may be referred to as the above-described combo node, combo NF, combined node, integrated NF, and interworking node, interworking NF, and the like. In addition, the function of NF exemplified by the combo node may also be implemented through interworking between two or more network entities. Furthermore, for convenience of illustration and description, NFs that simultaneously support different network systems may be indicated using a "+" symbol or a "/" symbol. For example, when the SMF and the PGW-C are configured by one combo node, they may be expressed as PGW-C/SMF, PGW-C+SMF, SMF/PGW-C, or SMF+PGW-C.

The UEs 201a and 201b may establish a session by connecting to a data network (e.g., a network providing Internet service) through a 5GS or EPS system. Here, the UE may distinguish each data network by using an identifier called a data network name (DNN) or an access point name (APN). To distinguish data networks, the DNN may be used in the 5GS and the APN may be used in the EPS. The DNN and APN may be used to determine NFs related to the user plane, interfaces between NFs, operator policies, etc. when a UE connects a network system and a session. The DNN and the APN may be understood as equivalent information and may transfer the same information. The DNN may be used, for example, to select the SMF and UPF(s) for a PDU session, and may be used to select interfaces (e.g., N6 interface) between the data network and the UPF for the PDU session. Additionally, the DNN may be used to determine the mobile communication service provider's policy to be applied to the PDU session.

In the following embodiments, combo nodes such as UDM+HSS node, PCF+PCRF node, the SMF+PGW-C node, UPF+PGW-C node, etc. will be described with the name "node" omitted for ease of explanation. In addition, in the following embodiments, the definition of a message defined in one example can be applied in the same meaning in other examples of using the same message.

The PCF may be divided into a session management-policy control function (SM-PCF) 210 in charge of a session management policy (SM policy) and a UE-policy control function (UE-PCF) 209 in charge of a UE policy. The SM-PCF 210 may be connected to an SMF 208 through an N7 interface. The SM-PCF 210 may not support an N15 interface. The UE-PCF 209 may be connected to an AMF 205 through an N15 interface. The UE-PCF 209 may not support an N7 interface. The SM-PCF and the UE-PCF may be physically and/or logically located in one device or one PCF, but may be distinguished as different PCF instances.

The UE policy provided to the UE by the PCF may include access network discovery & selection policy, UE route selection policy, vehicle-to-everything (V2X) policy, and/or ProSe policy.

Access network discovery & selection policy (ANDSP): this includes policy information required when a UE selects a non-3GPP access network.

UE route selection policy (URSP): this includes policy information required to route traffic leaving a UE.

V2X policy (V2XP): this includes policy information that provides the configuration parameters required for a UE to perform V2X communication.

ProSe Policy (ProSeP): this includes policy information that provides configuration parameters required for a UE to perform ProSe direct discovery, ProSe direct communication, and ProSe UE-to-Network Relay and Remote UE communication.

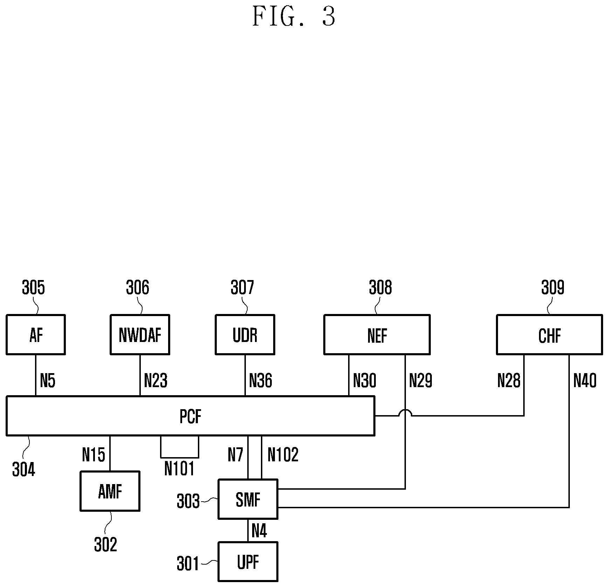

FIG. 3 illustrates a network structure and interfaces related to a policy control and rate control system of a 5G system according to an embodiment of the disclosure.

A policy control function (PCF) 304 may serve as an integrated control framework to control network operations.

An application function (AF) 305 may provide session-related information to the charging function in order to support rule generation.

A network data analytics function (NWDAF) 306 may collect data from a predetermined NF included in a core network. Here, the NWDAF and the counterpart NF should belong to the same PLMN.

A unified data repository (UDR) 307 may provide subscriber information data (subscription data), policy data, structured data for exposure, and application data to the UDM (not shown), the PCF 304, the NEF 308, and the like.

A network exposure function (NEF) 308 may serve to securely expose network services and functions.

A charging function (CHF) 309 communicates with the 5G core network and may provide a charging system related to network resource use.

One PCF instance cannot support N15 and N7 at the same time.
- N15: Reference point between the AMF 302 and the PCF 304
- N7: Reference point between the SMF 303 and the PCF 304
- N4: Reference point between the SMF 303 and the UPF 301
- N5: Reference point between the AF 305 and the PCF 304
- N23: Reference point between the NWDAF 306 and the PCF 304
- N36: Reference point between the UDR 307 and the PCF 304
- N30: Reference point between the NEF 308 and the PCF 304
- N29: Reference point between the NEF 302 and the SMF 303
- N28: Reference point between the CHF 309 and the PCF 304
- N40: Reference point between the CHF 309 and the SMF 303
- N101: Reference point between the PCF instance supporting N15 and the PCF instance supporting N7
- N102: Reference point between the PCF and SMF supporting N15

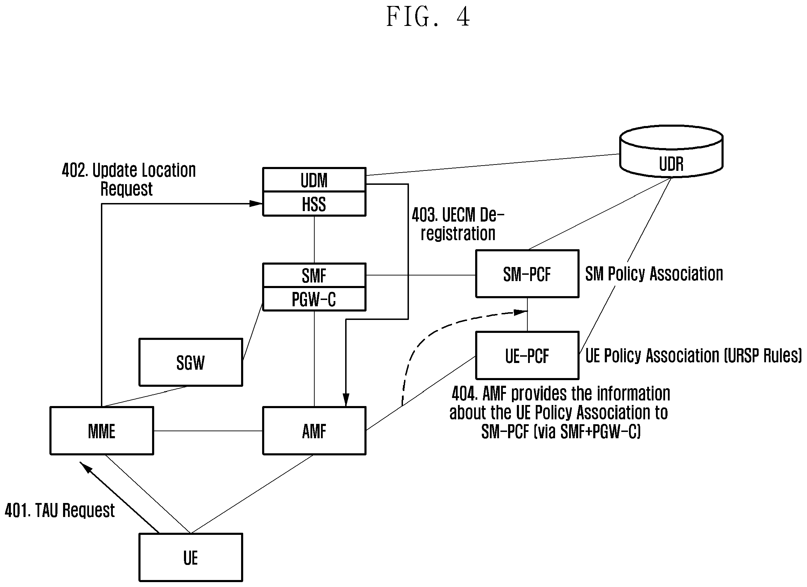

FIG. 4 illustrates a method in which a core network transfers a UE policy to a UE in an EPS/5GS interworking system according to an embodiment of the disclosure.

Referring to FIG. 4, a method is described for changing a connection between the UE and the PCF through a 5G NF to a connection through an EPS entity during a procedure in which the UE moves from the 5GS to the EPS. Meanwhile, depending on configurations and/or definitions in the system, not all of the operations described below need necessarily be included, and some operations may be omitted.

401. When a UE moves from the 5GS to the EPS, the UE may transmit a tracking area update (TAU) request to an MME through an eNodeB.

402. After establishing a connection with the SMF+PGW-C through the SGW, the MME may transmit an update location request to the UDM+HSS.

403: The UDM+HSS may transmit an AMF de-registration request to the AMF as a serving AMF which has performed UE mobility management in the 5GS.

404: The AMF may transmit information related to a UE Policy Association established between the AMF and the UE-PCF to the SM-PCF through the SMF+PGW-C so that the SM-PCF may reuse the UE Policy Association. The SM-PCF may request UE Policy Association establishment or UE Policy Association Modification from the UE-PCF, based on the received UE Policy Association-related information. Based on the information provided when the SM-PCF requests UE Policy Association Establishment/Modification, the UE-PCF may recognize that a request has been made to change the UE Policy Association that the UE-PCF has established with the AMF to the UE Policy Association to be established with the SM-PCF, and may establish the UE Policy Association by determining whether it is appropriate to establish the UE Policy Association with the SM-PCF. When the UE-PCF and the SM-PCF establish a UE Policy Association and transmit/receive UE policy information and UE Policy related information, the UE-PCF and the SM-PCF may use the N101 interface as described in FIGS. 2 and 3. In this case, the N101 interface may support all or part of the service operation between the AMF and the PCF that the N15 interface supported.

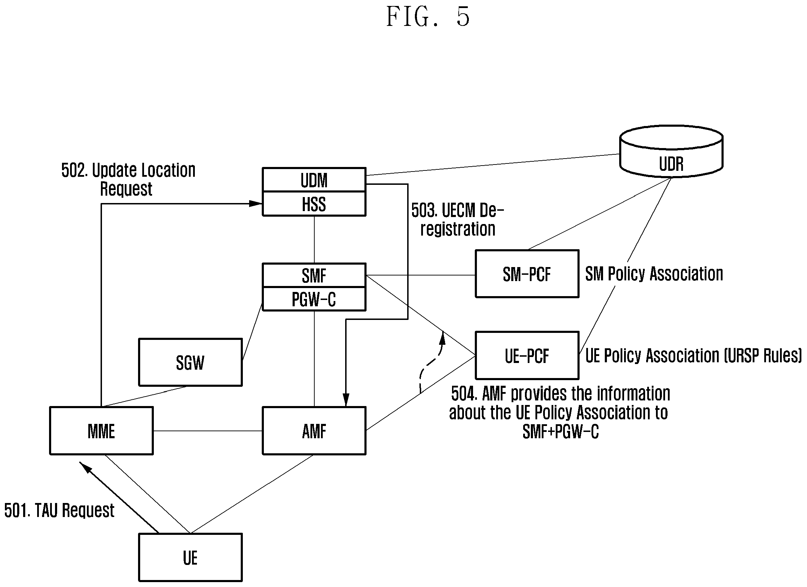

FIG. 5 illustrates a method in which a core network transfers a UE policy to a UE in an EPS/5GS interworking system according to an embodiment of the disclosure.

Referring to FIG. 5, a method is described for changing a connection between the UE and the PCF through a 5G NF to a connection through an EPS entity during a procedure in which the UE moves from the 5GS to the EPS. Meanwhile, depending on configurations and/or definitions in the system, not all of the operations described below need necessarily be included, and some operations may be omitted.

501. When a UE moves from the 5GS to the EPS, the UE may transmit a tracking area update (TAU) request to an MME through an eNodeB.

502. After establishing a connection with the SMF+PGW-C through the SGW, the MME may transmit an update location request to the UDM+HSS.

503: The UDM+HSS may transmit an AMF de-registration request to the AMF as a serving AMF which has performed UE mobility management in the 5GS.

504: The AMF may transmit information related to UE Policy Association established between the AMF and the UE-PCF to the SM-PCF through the SMF+PGW-C so that the SM-PCF may reuse the UE Policy Association. The SMF+PGW-C may request UE Policy Association Establishment or UE Policy Association Modification from the UE-PCF, based on the received UE Policy Association-related information. Based on the information provided when the SMF+PGW-C requests UE Policy Association Establishment/Modification, the UE-PCF may recognize that a request has been made to change the UE Policy Association that the UE-PCF has established with the AMF to the UE Policy Association to be established with the SMF+PGW-C, and may establish the UE Policy Association by determining whether it is appropriate to establish the UE Policy Association with the SMF+PGW-C. When the UE-PCF and the SMF+PGW-C establish a UE Policy Association and transmit/receive UE policy information and UE Policy related information, the UE-PCF and the SMF+PGW-C may use the N102 interface as described in FIGS. 2 and 3. In this case, the N102 interface may support all or part of the service operation between the AMF and the PCF that the N15 interface supported.

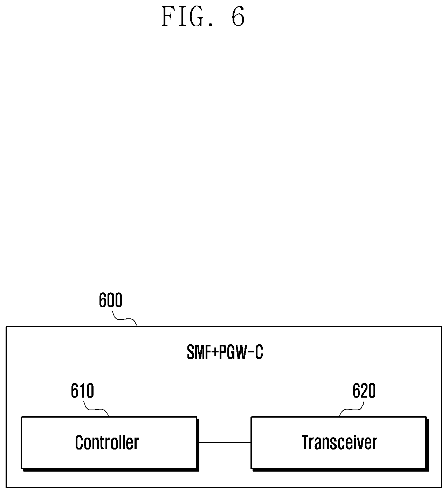

FIG. 6 illustrates the structure of a session management function + packet data network gateway control entity (SMF+PGW-C) according to embodiments of the disclosure.

FIG. 6 illustrates the structure of a network entity that performs a session management function (SMF) and a packet data network gateway-control (PGW-C) function. SMF+PGW-C 600 may be a concept that includes the SMF of 5GS and the PGW-C of EPS as one combo node. As shown in FIG. 6, the SMF+PGW-C 600 of the disclosure may include at least one controller (or a control unit or a processor) 610 and a transceiver (or a transceiver unit) 620 including a receiver and a transmitter. The SMF+PGW-C 600 may include a memory (not shown). The transceiver 620 and the memory may be connected to the at least one controller 610 to operate under the control of the at least one controller 610.

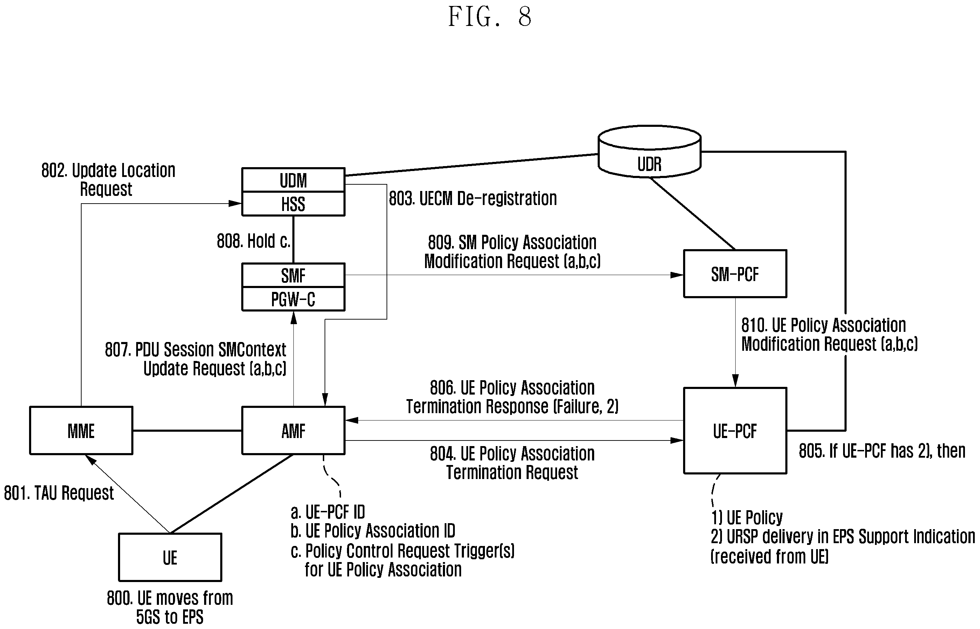

The at least one controller 610 may control a series of processes so that the operations shown in FIGS. 1 to 5 of the disclosure described above as well as the operations shown in FIGS. 8 to 13G described later may be performed. The transceiver 620 may transmit and receive a signal to and from a UE and other network devices. The signal may include a control message, data information, and the like.

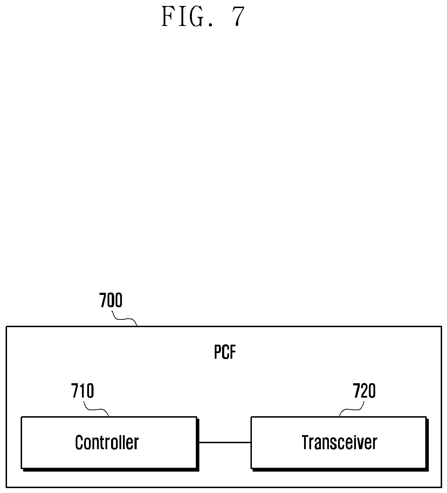

FIG. 7 illustrates the structure of a PCF according to embodiments of the disclosure.

FIG. 7 shows the structure of an entity performing a policy control function. A PCF 700 may be divided into an SM-PCF in charge of a session management policy (SM policy) and a UE-PCF in charge of a mobility management policy (AM Policy) and/or a UE Policy. The SM-PCF and the UE-PCF may each be configured as separate devices, and even if configured as the same device, they may be configured to be logically distinct. As shown in FIG. 7, the PCF 700 of the disclosure may include at least one controller (processor) 710 and a transceiver 720 including a receiver and a transmitter. The application function may include a memory (not shown). The transceiver 720 and the memory may be connected to the at least one controller 710 to operate under the control of the at least one controller 710.

The at least one controller 710 may control a series of processes so that the operations shown in FIGS. 1 to 5 of the disclosure described above as well as the operations shown in FIGS. 8 to 13G described later may be performed. The transceiver 720 may transmit and receive a signal to and from a UE and other network devices (the SMF+PGW-C 600 and the like). The signal may include a control message, data information, and the like.

Network devices of the disclosure may include all devices corresponding to network functions, such as AUSF, NEF, NF, UDM, AMF, UPF, SMF, NRF, PCF, SMF+PGW-C, UPF+PGW-U, SM-PCF, UE-PCF, UDM+HSS, and UDR, and each network function may be configured independently.

FIG. 8 illustrates a method in which a core network transfers a UE policy to a UE in an EPS/5GS interworking system according to an embodiment of the disclosure.

Referring to FIG. 8, a method is described in which the AMF changes a connection between the UE and the PCF through a 5G NF to a connection through an EPS entity, based on a determination of the UE-PCF during a procedure in which the UE moves from the 5GS to the EPS.

FIG. 8 shows a more specific embodiment of the embodiment described in FIGS. 4 and 5. In the description below, an explanation with respect to the method shown in FIG. 4 is provided first, and then the differences from the method shown in FIG. 5 are additionally explained. Meanwhile, depending on the configurations and/or definitions in the system, not all of the operations described below need necessarily be included, and some operations may be omitted.

800: The UE may move from the 5GS to the EPS.

801: The UE may transmit a tracking area update (TAU) request to an MME through an eNodeB.

802: The MME may establish a connection with the SMF+PGW-C through the SGW. Thereafter, the MME may transmit an update location request to the UDM+HSS.

803: The UDM+HSS may transmit an AMF de-registration request to the AMF as a serving AMF which has performed UE mobility management in the 5GS.

804: The AMF may request UE Policy Association Termination from the UE-PCF in response to the deregistration request of the UDM+HSS. More specifically, the AMF may store, as information related to the UE Policy, at least one of (a) UE-PCF ID, (b) UE Policy Association ID, and (c) Policy Control Request Trigger(s) for UE Policy Association. The AMF may request the UE-PCF identified by the UE-PCF ID to terminate the UE Policy Association identified by the UE Policy Association ID. The AMF may also notify the UE-PCF that the UE is moving (or has moved) from the 5GS to the MME. The notification to the UE-PCF that the UE is moving (or has moved) from the 5GS to the MME may be included in a message that the AMF is requesting the UE-PCF to terminate a UE Policy Association, or the UE-PCF and the AMF may have agreed in advance to notify each other through a separate procedure.

805: The UE-PCF may determine whether to terminate the UE Policy Association in response to the UE Policy Association termination request of the AMF. More specifically, the UE-PCF may store, as UE Policy-related information, at least one of (1) UE Policy and (2) URSP delivery in EPS Support Indication (received from the UE through the 5GS registration procedure, EPS registration procedure, EPS TAU procedure, and the like). When the URSP delivery in EPS Support Indication has been stored in association with the UE Policy Association that has been requested to be terminated, the UE-PCF may determine not to terminate the UE Policy Association. This determination may include (A) determining that the termination of the UE Policy Association has been requested because the UE is moving (or has moved) from the 5GS to the MME, (B) recognizing that a UE that has provided the URSP delivery in EPS Support Indication to the UE-PCF is a UE capable of receiving UE Policy including the URSP in the EPS, and (C) therefore determining not to terminate the UE Policy Association.

806: When it is determined that the UE Policy Association is not terminated, the UE-PCF may notify the AMF that UE Policy Association Termination is not performed. This notification includes a UE policy association termination response message including a result "failure". Furthermore, this notification additionally includes the URSP delivery EPS Support Indication that the UE-PCF has stored. The AMF may recognize that the UE Policy Association is reusable in the EPS, based on the result "failure" and/or the URSP delivery EPS Support Indication.

807: To enable the reuse of the UE Policy Association established between the AMF and the UE-PCF in the EPS, the AMF may provide information related to the UE Policy Association to the SMF+PGW-C. More specifically, the AMF may transmit, to the SMF+PGW-C, a PDU Session SM Context Update Request containing at least one of (a) UE-PCF ID, (b) UE Policy Association ID, and (c) Policy Control Request Trigger(s) for UE Policy Association. When the AMF provides the Policy Control Request Trigger(s) for UE Policy Association to the SMF+PGW-C, the AMF may provide some or all of the Policy Control Request Trigger(s) for UE Policy Association that the AMF itself has stored, or a transformation of some or all of the same. This providing may be determined based on whether there is common content between the content of the policy control request trigger that is supportable by the AMF and the content of the policy control request trigger that is supportable by the SMF. The content of the policy control request trigger that is supportable by the AMF may include at least one of the information of Table 2 below. The content of the policy control request trigger that is supportable by the SMF may include at least one of the information in Table 3 below. For example, when the policy control request trigger used by the AMF includes "Location change (tracking area)" of Table 2, this may mean that the SMF may use "Location change (serving area)" of Table 3. In another example, when the policy control request trigger used by the AMF includes "PLMN change" of Table 2, this may mean that the SMF may use "PLMN change" of Table 3. As shown in the example above, the AMF and/or the SMF may determine whether any of the content of the policy control request trigger that can be used by the AMF is reusable as the policy control request trigger that can be used by the SMF. For example, the AMF may provide, to the SMF, all of the Policy Control Request Trigger(s) for UE Policy Association that the AMF has stored, and the SMF may adopt only the content of the Policy Control Request Trigger(s) for UE Policy Association that can be used by the SMF from the Policy Control Request Trigger(s) for UE Policy Association received from the AMF. Alternatively, the AMF may select only the content that the SMF can adopt from the Policy Control Request Trigger(s) for UE Policy Association that the AMF has stored and provide the selected content to the SMF, and the SMF may also adopt all the content received from the AMF.

**[Table 2]**

| **Policy Control Request Trigger** | **Description** | **Condition for reporting** |
|---|---|---|
| Location change (tracking area) | The tracking area of the UE has changed. | PCF (AM Policy Association, UE Policy Association) |
| Change of UE presence in Presence Reporting Area | The UE is entering/leaving a Presence Reporting Area. | PCF (AM Policy Association, UE Policy Association) |
| Service Area restriction change | The subscribed service area restriction information has changed. | PCF (AM Policy Association) |
| RFSP index change | The subscribed RFSP index has changed. | PCF (AM Policy Association) |
| Change of the Allowed NSSAI | The Allowed NSSAI has changed. | PCF (AM Policy Association) |
| Generation of Target NSSAI | The Target NSSAI has been generated. | PCF (AM Policy Association) |
| UE-AMBR change | The subscribed UE-AMBR has changed. | PCF (AM Policy Association) |
| UE-Slice-MBR change | The subscribed UE-Slice-MBR has changed. | PCF (AM Policy Association) |
| PLMN change | The UE has moved to another operators' domain. | PCF (UE Policy Association) |
| SMF selection management | UE request for an unsupported DNN or UE request for a DNN within the list of DNN candidates for replacement per S-NSSAI. | PCF (AM Policy Association) |
| Connectivity state changes | The connectivity state of UE is changed. | PCF (UE Policy Association) |
| NWDAF info change | The NWDAF instance IDs used for the UE or associated Analytics IDs used for the UE and available in the AMF have changed. | PCF (AM Policy Association) |

**[Table 3]**

| **Policy Control Request Trigger** | **Description** | **Difference compared with table 6.2 and table A.4.3-2 in TS 23.203** | **Conditions for reporting** | **Motivatio n** |
|---|---|---|---|---|
| PLMN change | The UE has moved to another operators' domain. | None | PCF | |
| QoS change | The QoS parameters of the QoS Flow has changed. | Removed | | Only applicable when binding of bearers was done in PCRF. |
| QoS change exceeding authorization | The QoS parameters of the QoS Flow has changed and exceeds the authorized QoS. | Removed | | Only applicable when binding of bearers was done in PCRF. |
| Traffic mapping information change | The traffic mapping information of the QoS profile has changed. | Removed | | Only applicable when binding of bearers was done in PCRF. |
| Resource modification request | A request for resource modification has been received by the SMF. | None | SMF always reports to PCF | |
| Routing information change | The IP flow mobility routing information has changed (when IP flow mobility as specified in TS 23.261 applies) or the PCEF has received Routing Rules from the UE (when NBIFOM as specified in TS 23.161 applies). | Removed | | Not in 5GS yet. |
| Change in Access Type(NOTE 8) | The Access Type and, if applicable, the RAT Type of the PDU Session has changed. | None | PCF | |
| EPS Fallback | EPS fallback is initiated | Added | PCF | |
| Loss/recovery of transmission resources | The Access type transmission resources are no longer usable/again usable. | Removed | | Not in 5GS yet. |
| Location change (serving cell)(NOTE 6) | The serving cell of the UE has changed. | None | PCF | |
| Location change (serving area)(NOTE 2) | The serving area of the UE has changed. | None | PCF | |
| Location change(serving CN node)(NOTE 3) | The serving core network node of the UE has changed. | None | PCF | |
| Change of UE presence in Presence Reporting Area (see NOTE 1) | The UE is entering/leaving a Presence Reporting Area. | None | PCF | Only applicable to PCF |
| Out of credit | Credit is no longer available. | None | PCF | |
| Reallocation of credit | Credit has been reallocated after the former Out of credit indication. | Added | PCF | |
| Enforced PCC rule request | SMF is performing a PCC rules request as instructed by the PCF. | None | PCF | |
| Enforced ADC rule request | TDF is performing an ADC rules request as instructed by the PCRF. | Removed | | ADC Rules are not applicable. |
| UE IP address change | A UE IP address has been allocated/released. | None | SMF always reports allocated or released UE IP addresses | |
| UE MAC address change | A new UE MAC address is detected or a used UE MAC address is inactive for a specific period. | New | PCF | |
| Access Network Charging Correlation Information | Access Network Charging Correlation Information has been assigned. | None | PCF | |
| Usage report(NOTE 4) | The PDU Session or the Monitoring key specific resources consumed by a UE either reached the threshold or needs to be reported for other reasons. | None | PCF | |
| Start of application traffic detection and Stop of application traffic detection (NOTE 5) | The start or the stop of application traffic has been detected. | None | PCF | |
| SRVCC CS to PS handover | A CS to PS handover has been detected. | Removed | | No support in 5GS yet |
| Access Network Information report | Access information as specified in the Access Network Information Reporting part of a PCC rule. | None | PCF | |
| Credit management session failure | Transient/Permanent failure as specified by the CHF. | None | PCF | |
| Addition / removal of an access to an IP-CAN session | The PCEF reports when an access is added or removed. | Removed | | No support in 5GS yet |
| Change of usability of an access | The PCEF reports that an access becomes unusable or usable again. | Removed | | No support in 5GS yet |
| 3GPP PS Data Off status change | The SMF reports when the 3GPP PS Data Off status changes. | None | SMF always reports to PCF | |
| Session AMBR change | The Session-AMBR has changed. | Added | SMF always reports to PCF | |
| Default QoS change | The subscribed QoS has changed. | Added | SMF always reports to PCF | |
| Removal of PCC rule | The SMF reports when the PCC rule is removed. | Added | SMF always reports to PCF | |
| Successful resource allocation | The SMF reports to the PCF that the resources for a PCC rule have been successfully allocated. | Added | PCF | |
| GFBR of the QoS Flow can no longer (or can again) be guaranteed | The SMF notifies the PCF when receiving notifications from RAN that GFBR of the QoS Flow can no longer (or can again) be guaranteed. | Added | | |
| UE resumed from suspend state | The SMF reports to the PCF when it detects that the UE is resumed from suspend state. | None | PCF | Only applicable to EPC IWK |
| Change of DN Authorization Profile Index | The DN Authorization Profile Index received from DN-AAA has changed. | Added | SMF always reports to PCF | |
| 5GS Bridge information available | SMF has detected new 5GS Bridge information, which may contain, user-plane Node ID, UE-DS-TT residence time and Ethernet port (port number and MAC address) or IP address for the PDU Session and/or PMIC and/or UMIC. | Added | PCF | |
| QoS Monitoring for URLLC | The SMF notifies the PCF of the QoS Monitoring information (e.g. UL packet delay, DL packet delay or round trip packet delay). | Added | PCF | |
| DDN Failure event Subscription with Traffic Descriptor | The SMF requests PCF to provide or remove policies if it received an event subscription or cancellation for DDN Failure event including traffic descriptors. The SMF provides the traffic descriptors to the PCF for policy evaluation. | Added | PCF | |
| DDD Status event Subscription with Traffic Descriptor | The SMF requests PCF to provide or remove policies if it received an event subscription or cancellation for DDD Status event including traffic descriptors. The SMF provides the traffic descriptors and the requested type(s) of notifications (notifications about downlink packets being buffered, and/or discarded) to the PCF for policy evaluation. | Added | PCF | |
| QoS constraints change | The QoS constraints in the VPLMN have been provided or changed. | Added | SMF always reports to PCF | |
| Satellite backhaul category change | The backhaul is changed between different satellite backhaul categories, or between satellite backhaul and non-satellite backhaul. | Added | PCF | |
| NWDAF info change | The NWDAF instance IDs used for the PDU session or associated Analytics IDs used for the PDU session and available in the SMF have changed. | Added | PCF | |
| Request for notification on SM Policy Association establishment or termination(NO TE 9) | The SMF reports to the PCF the request to notify on the established or terminated SM Policy Association, | Added | PCF | |
| NOTE 1: The maximum number of PRA(s) per UE per PDU Session is configured in the PCF. The PCF may have independent configuration of the maximum number for Core Network preconfigured PRAs and UE-dedicated PRAs. The exact number(s) should be determined by operator in deployment. | | | | |
| NOTE 2: This trigger reports change of Tracking Area in both 5GS and EPC interworking,or reports change of Routing Area for GERAN/UTRAN access (see Annex G of TS 23.502). | | | | |
| NOTE 3: This trigger reports change of AMF in 5GC, change between ePDG and Serving GW in EPC, change between Serving GWs in EPC, change between EPC and 5GC, change between Serving Gateway and SGSN in GERAN/UTRAN from/to E-UTRAN mobility, or change between SGSNs in the case of GERAN/UTRAN access. In HR roaming case, if the AMF change is unknown by the H-SMF, then the AMF change is not reported. | | | | |
| NOTE 4: Usage is defined as either volume or time of user plane traffic. | | | | |
| NOTE 5: The start and stop of application traffic detection are separate event triggers, but received under the same subscription from the PCF. | | | | |
| NOTE 6: Location change of serving cell can increase signalling load on multiple interfaces. Hence it is recommended that any such serving cell changes only applied for a limited number of subscribers avoiding extra signalling load. It also is applicable for GERAN/UTRAN access. | | | | |
| NOTE 7: Void. | | | | |
| NOTE 8: For 3GPP access the RAT type may refer to NR, E-UTRAN, and, when the SMF+PGW-C enhancements to support GERAN/UTRAN access via Gn/Gp interface as specified in Annex L of TS 23.501 apply, to UTRAN or GERAN. For MA PDU Session this trigger reports the current used Access Type(s) and RAT type(s) upon any change of Access Type and RAT type. | | | | |
| NOTE 9: The PCF for the PDU Session knows the change of the PCF for the UE by this Policy Control Request Trigger based on the associated binding information of and notifies the PCF for the UE as described in clause 6.1.3.18. | | | | |

808: The SMF+PGW-C may perform a procedure for the reuse of UE Policy Association according to the request of the AMF. When the SMF+PGW-C receives the Policy Control Request Trigger(s) for UE Policy Association from the AMF, the SMF+PGW-C may store the same. More specifically, when storing the Policy Control Request Trigger(s) for UE Policy Association provided by the AMF, the SMF+PGW-C may (A) merge and store the Policy Control Request Trigger(s) for SM Policy Association if it has previously stored them, or (B) the Policy Control Request Trigger(s) for SM Policy Association is not stored, the SMF+PGW-C may store a new Policy Control Request Trigger(s) for SM Policy Association that is different from the Policy Control Request Trigger(s) for UE Policy Association, or (C) may store the policy control request trigger(s) UE Policy Association. In addition, when performing at least one of operations (A), (B), and (C) above, the SMF+PGW-C may, as described in operation 807, store all of the Policy Control Request Trigger(s) for UE Policy Association provided by the AMF or may store the Policy Control Request Trigger(s) for UE Policy Association that the SMF+PGW-C may adopt from the content provided by the AMF. When the UE Policy Association is transferred to the SM-PCF (after operation 810) and the UE is moved through TAU to the EPS (the UE moves to the EPS), if a condition corresponding to the content of the Policy Control Request Trigger(s) for UE Policy Association that the SMF+PGW-C itself has stored (including content stored as the Policy Control Request Trigger(s) for UE Policy Association or content stored as Policy Control Request Trigger(s) for SM Policy Association) is met, the SMF+PGW-C may report this information to the SM-PCF, and the SM-PCF may report this information to the UE-PCF again.

809: The SMF+PGW-C may transfer, to the SM-PCF, information related to the UE Policy Association required for reuse of the UE Policy Association received from the AMF. More specifically, the SMF+PGW-C may transmit, to the SM-PCF, an SM Policy Association Modification Request including at least one of (a) UE-PCF ID, (b) UE Policy Association ID, and (c) Policy Control Request Trigger(s) for UE Policy Association. The content of the Policy Control Request Trigger(s) for UE Policy Association may correspond to all of the content received from the AMF in operation 807 or all of the content stored by the SMF+PGW-C in operation 808.

810: The SM-PCF may request UE Policy Association Establishment or UE Policy Association Modification from the UE-PCF, based on the received UE Policy Association-related information. More specifically, the SM-PCF may receive at least one of (a) UE-PCF ID, (b) UE Policy Association ID, and (c) Policy Control Request Trigger(s) for UE Policy Association from the SMF+PGW-C, and may request the UE-PCF identified by the UE-PCF ID to change the UE Policy Association identified by the UE Policy Association ID and notify the UE-PCF that the received Policy Control Request Trigger(s) for UE Policy Association are applied to the corresponding UE Policy Association. Based on the information provided when the SM-PCF requests UE Policy Association Establishment/Modification, the UE-PCF may recognize that a request has been made to change the UE Policy Association identified by the UE Policy Association ID that the UE-PCF has established with the AMF to the UE Policy Association to be established with the SM-PCF, and may establish the UE Policy Association by determining whether it is appropriate for the UE-PCF to establish the UE Policy Association with the PCF, rather than the AMF, as the NF type. More specifically, as described in operation 805, when the UE-PCF has stored the URSP delivery in EPS Support Indication (received from the UE through the 5GS registration procedure, EPS registration procedure, EPS TAU procedure, and the like), the UE-PCF may determine that it is appropriate to establish the UE Policy Association with the PCF. Thereafter, when a change occurs in the information related to the corresponding UE Policy Association (including UE Policy and Policy Control Request Trigger(s) for UE Policy Association), the UE-PCF may transmit this change to the SM-PCF. When a change occurs in Policy Control Request Trigger(s) for UE Policy Association, the SM-PCF may transmit this change to the SMF+PGW-C.

The content of operations 800 to 810 have been described based on the method shown in FIG. 4, but the content of operations 800 to 810 may also be applied to the method shown in FIG. 5. In this case, the content of operation 809 may be merged into operation 810. For example, the SMF+PGW-C may transmit a UE Policy Association Establishment/Modification request directly to the UE-PCF. Additionally, in operation 810, the UE-PCF may recognize that a request has been made to change the UE Policy Association identified by the UE Policy Association ID that the UE-PCF has established with the AMF to the UE Policy Association to be established with the SMF+PGW-C, and may establish the UE Policy Association by determining whether it is appropriate for the UE-PCF to establish the UE Policy Association with the SMF, rather than the AMF, as the NF type. More specifically, as described in operation 805, when the UE-PCF has stored the URSP delivery in EPS Support Indication (received from the UE through the 5GS registration procedure, EPS registration procedure, EPS TAU procedure, and the like), the UE-PCF may determine that it is appropriate to establish a UE Policy Association with the SMF. Thereafter, when a change occurs in the information related to the corresponding UE Policy Association (including UE Policy and Policy Control Request Trigger(s) for UE Policy Association), the UE-PCF may transmit this change to the SMF+PGW-C. In addition, in operation 808, when the UE Policy Association is transferred to the SMF+PGW-C (after operation 810) and the UE is moved through TAU to the EPS (the UE moves to the EPS), if a condition corresponding to the content of the Policy Control Request Trigger(s) for UE Policy Association that the SMF+PGW-C has stored (including content stored as the Policy Control Request Trigger(s) for UE Policy Association or stored as Policy Control Request Trigger(s) for SM Policy Association) is met, the SMF+PGW-C may report this information to the UE-PCF.

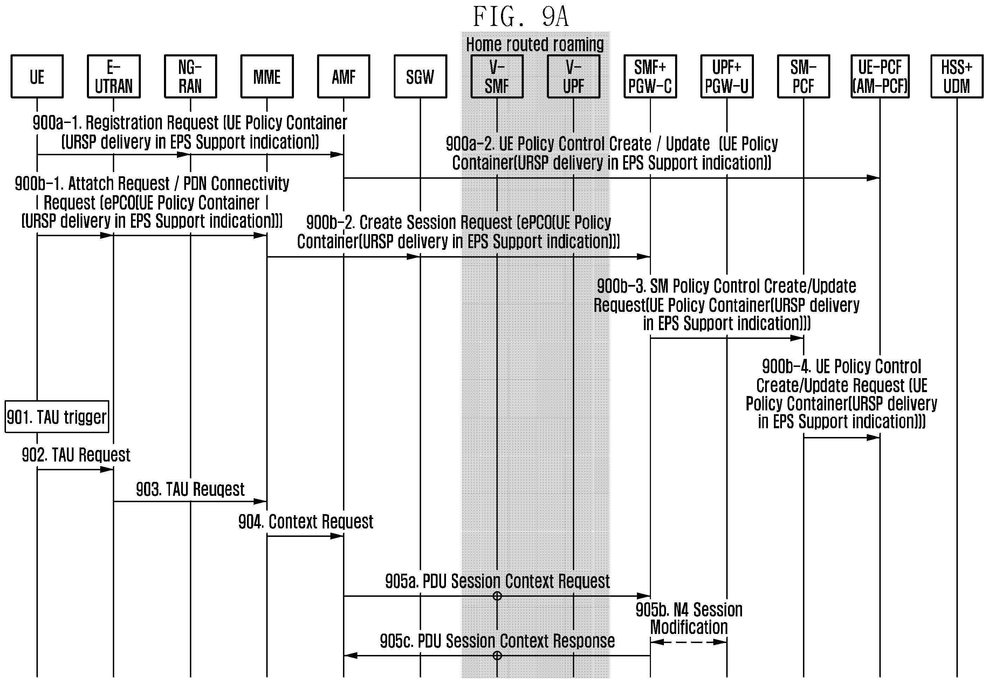

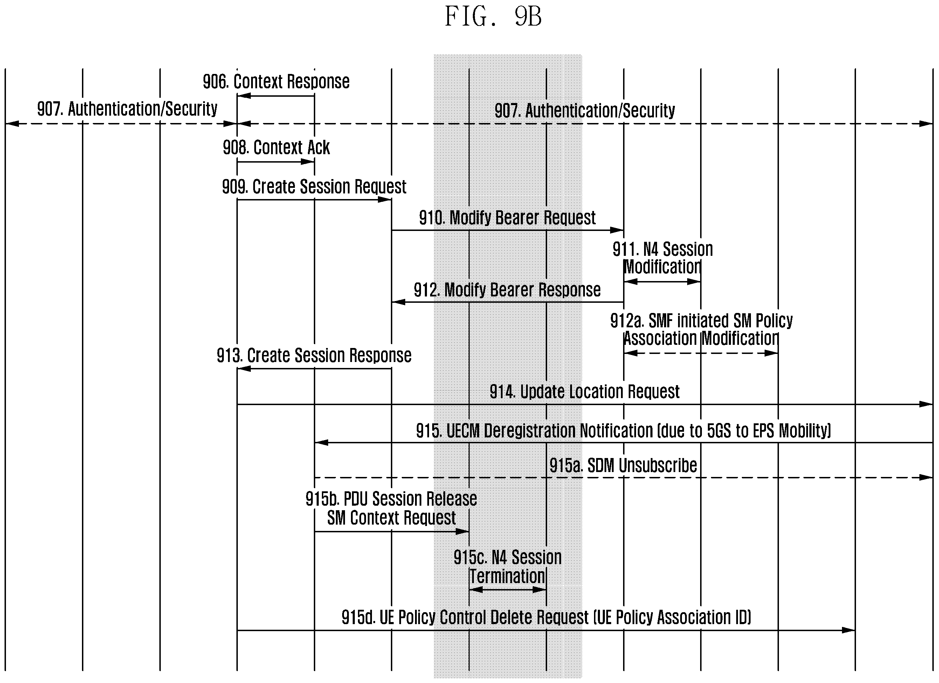

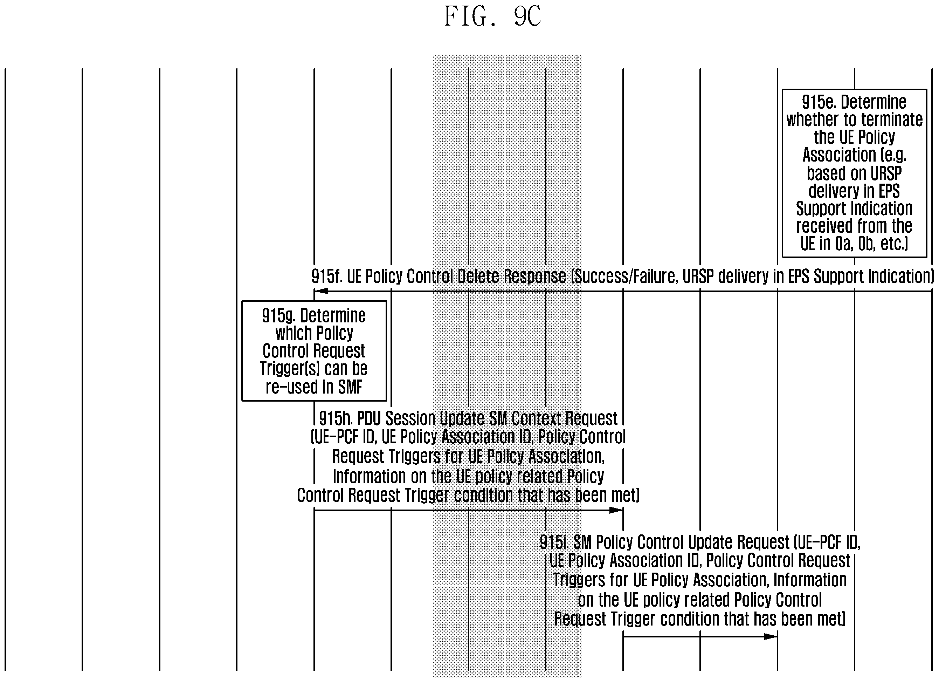

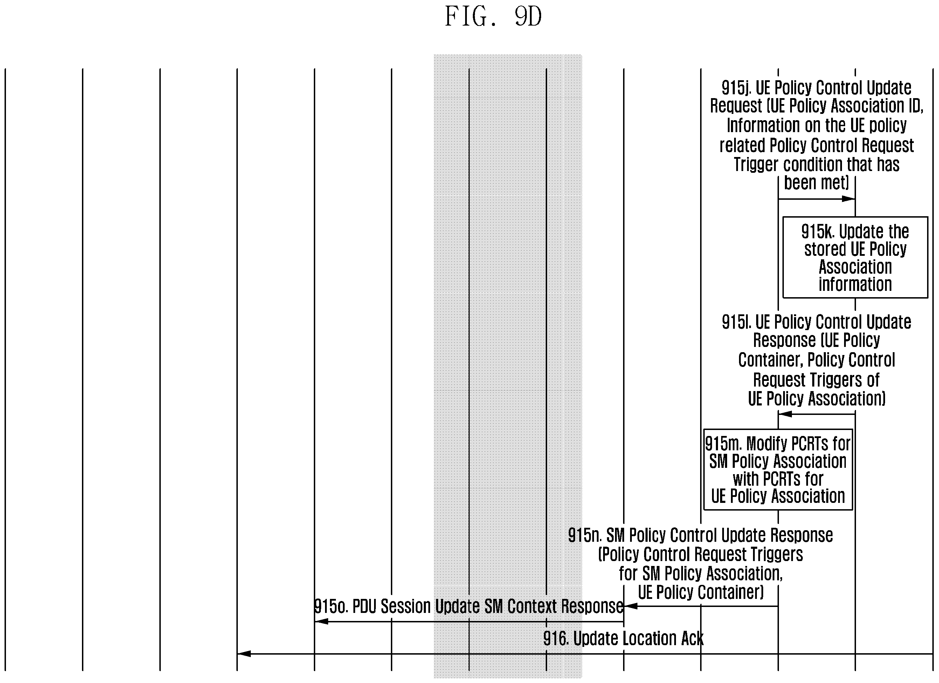

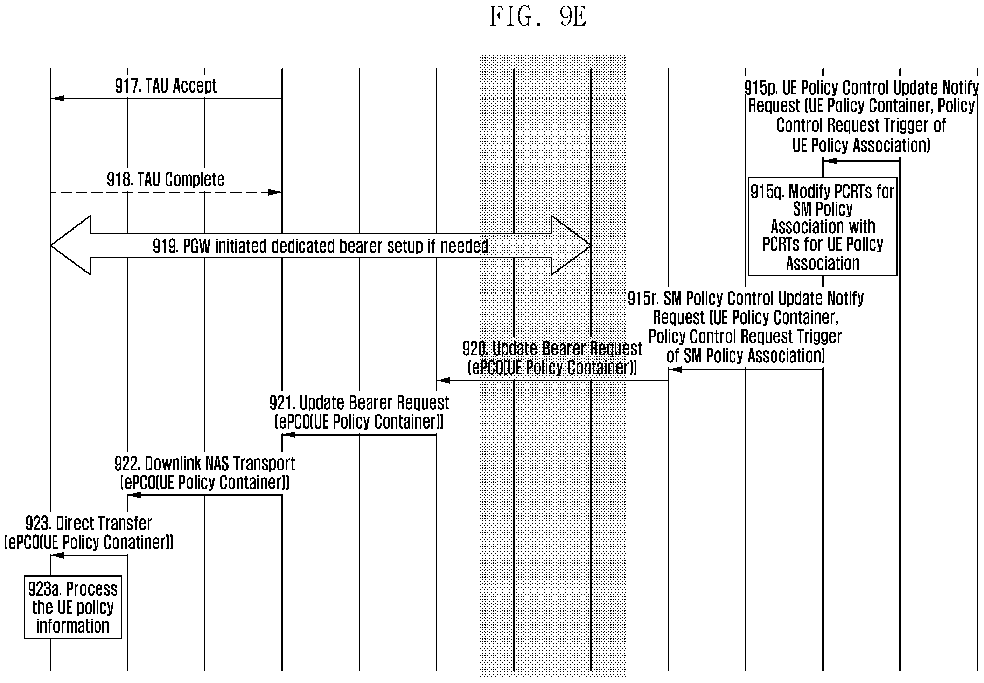

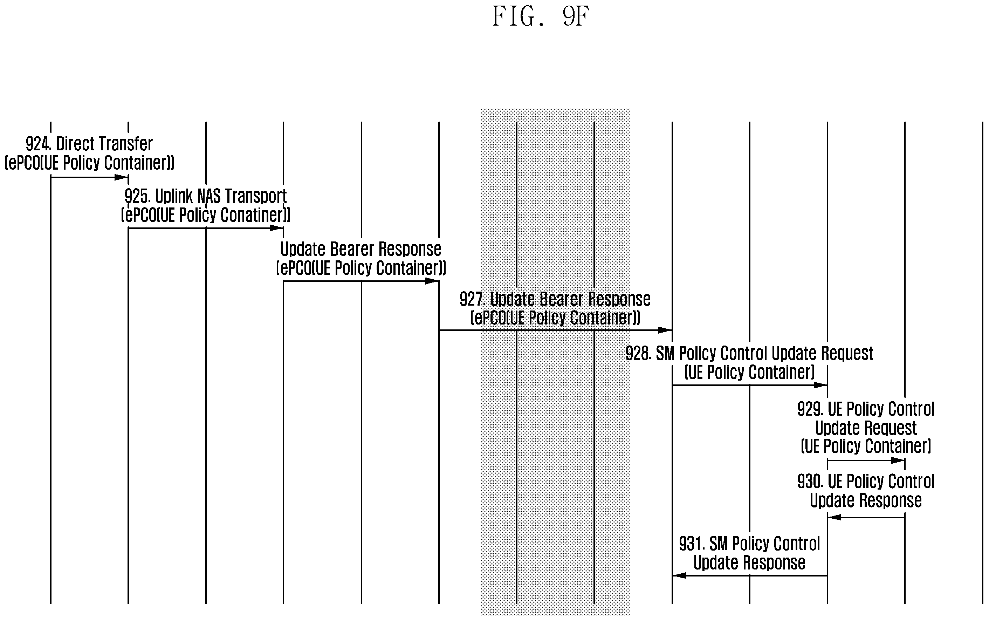

FIGS. 9A to 9F are sequence diagrams showing a method in which a core network transmits a UE policy to a UE in an EPS/5GS interworking system according to an embodiment of the disclosure.

With reference to FIGS. 9A to 9F, a method is described in which the AMF changes a connection between the UE and the PCF through a 5G NF to a connection through an EPS entity, based on a determination of the UE-PCF during a procedure in which the UE moves from the 5GS to the EPS.

FIGS. 9A to 9F show a more specific embodiment of the embodiment described in FIGS. 4, 5, and 8. In the description below, the content described in FIG. 8 based on the method proposed with reference to FIG. 4 is provided first, and then the differences from the method shown in FIG. 5 are additionally explained. In the description of each operation of FIGS. 9A to 9F, parts that are the same as those described in FIGS. 4, 5, and 8 may be omitted. Meanwhile, depending on configurations and/or definitions in the system, not all of the operations described below need necessarily be included, and some operations may be omitted.

900a-1: The UE may transmit a Registration Request to the AMF through the NG-RAN. Here, when the UE has a capability to receive a UE Policy including a URSP from the EPS, the UE may include the URSP delivery in EPS Support Indication in a UE policy container.

900a-2: The AMF may transfer the UE policy container received from the UE to the UE-PCF. In this case, the UE policy container may include the URSP delivery in EPS Support Indication.

900b-1: The UE may transmit an Attach Request or PDN Connectivity Request to the MME via E-UTRAN (or RAN supported by the EPS, e.g., GERAN, UTRAN, etc.). In this case, when the UE has a capability to receive a UE Policy including the URSP from the EPS, the UE may include, in ePCO (or PCO), a UE policy container including the URSP delivery in EPS Support Indication.

900b-2: The MME may transfer the ePCO (or PCO) received from the UE to the SMF+PGW-C. In this case, the ePCO (or PCO) may include the UE policy container including the URSP delivery in EPS Support Indication.

900b-3: The SMF+PGW-C, which has received the ePCO (or PCO) including the UE policy container from the UE, may transfer the UE policy container to the SM-PCF. Here, the UE policy container may include the URSP delivery in EPS Support Indication.

900b-4: The SM-PCF may transfer the UE container received through SMF+PGW-C to the UE-PCF. When the UE container includes the URSP delivery in EPS Support Indication, the UE-PCF may include or store the URSP delivery in EPS Support Indication in all UE Policy Associations related thereto.

901: When the UE moves from a 5GS coverage area to an EPS coverage area, the UE may perform a tracking area update procedure.

902: The UE may transmit a TAU Request to the E-UTRAN.

903: The E-UTRAN may transfer the TAU Request received from the UE to the MME.

904: The MME may transmit a Context Request to the AMF.

905a: With respect to PDU session(s) to be moved to the EPS, the AMF may determine whether to retrieve context including a mapped UE EPS connection from the V-SMF (in the case of HR roaming) or to retrieve the same from the SMF+PGW-C (in the case of non-roaming or LBO roaming). According to the determination above, the AMF may receive the context by transmitting a PDU Session Context Request to the V-SMF or the SMF+PGW-C.

905b: In the case of non-roaming or LBO roaming, when the SMF+PGW-C has never assigned CN Tunnel Info to the EPS bearer(s), the SMF may request N4 session modification from the UPF+PGW-U to establish a tunnel for each EPS bearer of the N4 session. The UPF+PGW-U may provide PGW-U Tunnel Info to the SMF+PGW-C for each EPS bearer.

905c: The V-SMF or SMF+PGW-C may respond to the AMF by transmitting a PDU Session Context Response.

906: The AMF may respond to the MME by transmitting a Context Response.

907: Authentication and/or security-related procedures may be performed among the UE, the MME, and the HSS+UDM.

908: The MME may transmit Context Acknowledge to the AMF. The Context Acknowledge may include a serving GW change indication indicating that a new serving GW has been selected.

909: The MME may transmit a Create Session Request to the SGW.

910: The SGW may transmit a Modify Bearer Request to the SMF+PGW-C.

911: The SMF+PGW-C may perform an N4 Session Modification procedure with the UPF+PGW-U.

912: The SMF+PGW-C may respond to the SGW by transmitting a Modify Bearer Response.

913: The SGW may respond to the MME by transmitting a Create Session Response.

914: The MME may transmit an Update Location Request to the HSS+UDM.

915: The HSS+UDM may transmit a LTECM Deregistration Notification to the AMF. Here, the notification may be provided on the grounds that the UE has moved from the 5GS to the EPS.

915a: The AMF may transmit SDM Unsubscribe to the HSS+UDM.

915b: In the case of HR roaming, the AMF may request release of SM context from the V-SMF.

915c: The V-SMF may request resource release from the V-UPF. For example, the V-SMF may perform an N4 session termination procedure with the V-UPF.

915d: The AMF may transmit a UE Policy Control Delete Request to the UE-PCF. This request corresponds to a request for the UE Policy Association termination procedure. The AMF may provide the UE Policy Association ID requesting the termination.

915e: The UE-PCF may determine whether the UE Policy Association has been terminated. More specifically, whether the UE Policy Association has been terminated may be determined based on whether the URSP delivery in EPS Support Indication indicating that the UE is able to receive a UE Policy including a URSP from the EPS has been received from the UE through operations 900a, 900b, or other procedures.

915f: The UE-PCF may respond to the AMF by transmitting a UE Policy Control Delete Response. When it is determined to terminate the UE Policy Association according to the request of the AMF in operation 915d, the UE-PCF may transmit a result "success". When it is determined not to terminate the UE Policy Association in operation 915e, the UE-PCF may transmit a result "failure". The UE-PCF may additionally provide the URSP delivery in EPS Support Indication. When receiving the result "failure" and/or the URSP delivery in EPS Support Indication, the AMF may recognize the UE Policy Association as being reusable in the EPS.

915g: The AMF may determine whether the UE Policy Association used in the 5GS is reusable in the EPS after the UE moves from the 5GS to the EPS. More specifically, as described above in operation 915f, when receiving the URSP delivery in EPS Support Indication from the UE-PCF along with a result "failure" of the UE Policy Association termination, the AMF may determine that the UE Policy Association is reusable in the EPS. When policy control request trigger(s) are included in the information about the UE Policy Association, the AMF may determine whether policy control request trigger(s) are reusable in the SMF. To determine whether the policy control request trigger(s) are reusable in the SMF, the method described in FIG. 8 may be applied.

915h: The AMF may transmit a PDU session update SM Context Request to the SMF+PGW-C. This request may correspond to a request to provide the SMF+PGW-C with the information required to reuse, in the EPS, the UE Policy Association established between the AMF and the UE-PCF. The AMF may provide information necessary for the SMF+PGW-C or SM-PCF to establish a UE Policy Association with the UE-PCF. This information may include at least one of (a) UE-PCF ID, (b) UE Policy Association ID, (c) Policy Control Trigger(s) for UE Policy Association, and (d) information on the UE policy-related Policy Control Request Trigger condition that has been met. The method described in FIG. 8 may be applied to determine or decide the content included in (c) Policy Control Trigger(s) for UE Policy Association. The (d) information on the UE policy-related Policy Control Request Trigger condition that has been met may be understood to mean that, when there is a policy control trigger that meets the conditions for the AMF to report to the UE-PCF in the content described in the (c) Policy Control Trigger(s) for UE Policy Association, the fact that the reporting condition is met and the information should be reported to the UE-PCF when the reporting condition is met.

915i: The SMF+PGW-C may transmit an SM Policy Control Update Request to the SM-PCF. This request may correspond to a request to provide the SM-PCF with the information required to reuse, in the EPS, the UE Policy Association established between the AMF and the UE-PCF. The SMF+PGW-C may provide the information required for the SM-PCF to establish a UE Policy Association with the UE-PCF. This information may include at least one of (a) UE-PCF ID, (b) UE Policy Association ID, (c) Policy Control Trigger(s) for UE Policy Association, and (d) information on the UE policy-related Policy Control Request Trigger condition that has been met, which are received from the AMF in operation 915h.

915j: The SM-PCF may transmit a UE Policy Control Update Request to the UE-PCF. This request may correspond to a request to provide the UE-PCF with the information required to reuse, in the EPS, the UE Policy Association established between the AMF and the UE-PCF. The SM-PCF may provide information required for the UE-PCF to establish a UE Policy Association with the SM-PCF. This information may include at least one of (b) UE Policy Association ID, (c) Policy Control Trigger(s) for UE Policy Association, and (d) information on the UE policy-related Policy Control Request Trigger condition that has been met, which are received from the SMF+PGW-C in operation 915i.

915k: The UE-PCF may update the stored UE Policy Association information, based on the information received from the SM-PCF in operation 915j. The UE-PCF may generate a new UE Policy or update an existing UE Policy. Additionally, in case that the condition of (d) information on the UE policy-related Policy Control Request Trigger condition that has been met is satisfied in operation 915j, the UE-PCF may generate a new UE Policy or update an existing UE Policy. The UE-PCF may generate new Policy Control Trigger(s) for UE Policy Association or update existing Policy Control Trigger(s) for UE Policy Association. Additionally, in case that (c) Policy Control Trigger(s) for UE Policy Association is received in operation 915j, the UE-PCF may update the received (c) Policy Control Trigger(s) for UE Policy Association.

915l: The UE-PCF may respond to the SM-PCF by transmitting a UE Policy Control Update Response. This response may mean that the UE Policy Association that has been established with the AMF has been changed to be established with the SM-PCF, and that in the future, if there is any change in information related to the UE Policy Association or in the UE Policy (which may include URSP) (operation 915p), it is possible for the UE-PCF to provide this change to the SM-PCF. The UE-PCF may provide, to the SM-PCF, at least one of the UE policy container including a UE Policy (which may include URSP) and the Policy Control Request Trigger(s) of UE Policy Association.

915m: The SM-PCF may store information received from the UE-PCF. When receiving the Policy Control Request Trigger(s) of UE Policy Association from the UE-PCF in operation 915l, the SM-PCF may modify the Policy Control Request Trigger(s) of UE Policy Association that the SM-PCF already has (which may be information received from the SMF+PGW-C in operation 915i), by using the received Policy Control Request Trigger(s) of UE Policy Association.

915n: The SM-PCF may transmit an SM Policy Control Update Response to the SMF+PGW-C. This response may include at least one of the Policy Control Request Trigger(s) of SM Policy Association to be used by the SMF+PGW-C and the UE policy container received from the UE-PCF. The Policy Control Request Trigger(s) of SM Policy Association may include the Policy Control Request Trigger(s) of UE Policy Association received from the UE-PCF. The SM-PCF may also provide the Policy Control Request Trigger(s) of UE Policy Association separately from the Policy Control Request Trigger(s) of SM Policy Association.

915o: The SMF+PGW-C may transmit a PDU Session Update SM Context Response to the AMF. This response may include information indicating that the UE Policy Association has been successfully transferred to the SM-PCF.

915p: When a change occurs in the information related to the UE Policy Association or UE Policy (which may include URSP), the UE-PCF may provide this change to the SM-PCF. The UE-PCF may provide, to the SM-PCF, at least one of the UE policy container including a UE Policy (which may include URSP) and the Policy Control Request Trigger(s) of UE Policy Association.

915q: The SM-PCF may store information received from the UE-PCF. When receiving the Policy Control Request Trigger(s) of UE Policy Association from the UE-PCF in operation 915p, the SM-PCF may modify the Policy Control Request Trigger(s) of UE Policy Association that the SM-PCF already has (which may be information received from the SMF+PGW-C in operation 915i), by using the received Policy Control Request Trigger(s) of UE Policy Association.

915r: The SM-PCF may transmit an SM Policy Control Update Notify Request to the SMF+PGW-C. This request may include at least one of the Policy Control Request Trigger(s) of SM Policy Association to be used by the SMF+PGW-C and the UE policy container received from the UE-PCF. The Policy Control Request Trigger(s) of SM Policy Association may include the Policy Control Request Trigger(s) of UE Policy Association received from the UE-PCF. The SM-PCF may also provide the Policy Control Request Trigger(s) of UE Policy Association separately from the Policy Control Request Trigger(s) of SM Policy Association.

916: The HSS+UDM may transmit Update Location Ack to the MME.

917: The MME may transmit TAU Accept to the UE.

9918: The UE may transmit TAU Complete to the MME.

919: When necessary, a dedicated bearer setup initiated by the PGW may be performed.

920: When receiving the UE policy container from the UE-PCF (this may include receiving the UE policy container from the SM-PCF in operations 915n and 915r), the SMF+PGW-C may provide ePCO (or PCO) including the UE policy container to the SGW. Here, the ePCO (or PCO) may be provided through an Update Bearer Request.

921: The SGW may transfer the ePCO (or PCO) including the UE policy container received from the SMF+PGW-C to the MME. Here, the ePCO (or PCO) may be transferred through the Update Bearer Request.

922: The MME may transfer the ePCO (or PCO) including the UE policy container received from the SGW to the E-UTRAN. In this case, a downlink NAS transport request may be used.

923: The E-UTRAN may transfer the ePCO (or PCO) including the UE policy container received from the MME to the UE. In this case, direct transfer may be used.

923a: The UE may perform operations required for processing of a UE Policy (which may include URSP), based on the information included in the UE policy container received from the UE-PCF. More specifically, the UE may store a URSP or update an existing URSP.

924: The UE may include UE Policy-related information to be provided to the UE-PCF in the UE policy container and then include the UE policy container in the ePCO (or PCO) to provide the same to the E-UTRAN. In this case, direct transfer may be used.

925: The E-UTRAN may transfer the ePCO (or PCO) including the UE policy container received from the UE to the MME. In this case, uplink NAS transfer may be used.

926: The MME may transfer the ePCO (or PCO) including the UE policy container received from the E-UTRAN to the SGW. In this case, an Update Bearer Response may be used.

927: The SGW may transfer the ePCO (or PCO) including the UE policy container received from the MME to the SMF+PGW-C. In this case, the Update Bearer Response may be used.

928: The SMF+PGW-C may transfer the ePCO (or PCO) including the UE policy container received from the SGW to the SM-PCF. In this case, the SM Policy Control Update Request may be used.

929: The SM-PCF may transfer the ePCO (or PCO) including the UE policy container received from the SMF+PGW-C to the UE-PCF. In this case, the UE Policy Control Update Request may be used.

930: The UE-PCF may transmit a UE Policy Control Update Response to the SM-PCF.

931: The SM-PCF may transmit an SM Policy Control Update Response to the SMF+PGW-C.

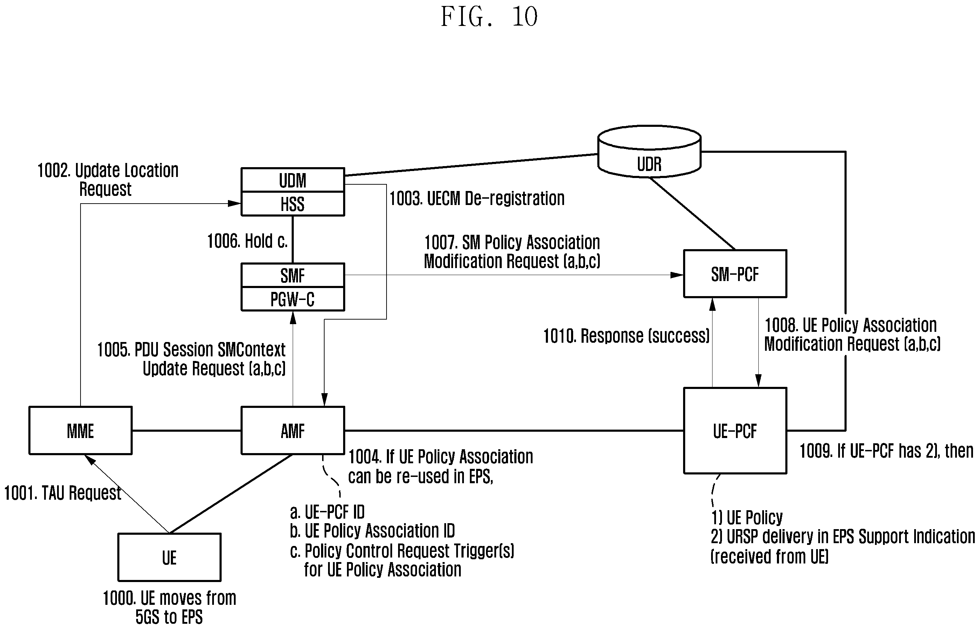

FIG. 10 illustrates a method in which a core network transfers a UE policy to a UE in an EPS/5GS interworking system according to an embodiment of the disclosure.

Referring to FIG. 10, a method is described in which an AMF changes a connection between the UE and the PCF through a 5G NF to a connection through an EPS entity, based on a determination of the AMF during a procedure in which the UE moves from the 5GS to the EPS.

FIG. 10 shows a more specific embodiment of the embodiment described in FIGS. 4 and 5. In the description below, an explanation with respect to the method suggested in FIG. 4 is provided first, and then the differences from the method shown in FIG. 5 are additionally explained. FIG. 10 may include methods that can be commonly applied in the method described in FIG. 8 and may have been omitted from the description below. Meanwhile, depending on the configurations and/or definitions in the system, not all of the operations described below need necessarily be included, and some operations may be omitted.

1000: The UE may move from the 5GS to the EPS.

1001: The UE may transmit a tracking area update (TAU) request to an MME through an eNodeB.

1002: The MME may establish a connection with the SMF+PGW-C through the SGW. Thereafter, the MME may transmit an update location request to the UDM+HSS.

1003: The UDM+HSS may transmit an AMF de-registration request to the AMF as a serving AMF which has performed UE mobility management in the 5GS.

1004: The AMF may determine whether a UE Policy Association is reusable in the EPS according to the deregistration request of the UDM+HSS. More specifically, the AMF may store, as information related to the UE Policy, at least one of (a) UE-PCF ID, (b) UE Policy Association ID, and (c) Policy Control Request Trigger(s) for UE Policy Association. The AMF may determine whether the UE Policy Association identified by the UE Policy Association ID established with the UE-PCF identified by the UE-PCF ID can be moved to the EPS.

1005: To enable the reuse of the UE Policy Association established between the AMF and the UE-PCF in the EPS, the AMF may provide information related to the UE Policy Association to the SMF+PGW-C. More specifically, the AMF may provide, to the SMF+PGW-C, at least one of (a) UE-PCF ID, (b) UE Policy Association ID, and (c) Policy Control Request Trigger(s) for UE Policy Association, and may transmit a PDU Session SM Context Update Request. When the AMF provides the Policy Control Request Trigger(s) for UE Policy Association to the SMF+PGW-C, the AMF may provide some or all of the Policy Control Request Trigger(s) for UE Policy Association that the AMF itself has stored, or a transformation of some or all of the same. This providing may be determined based on whether there is common content between the content of the policy control request trigger that is supportable by the AMF and the content of the policy control request trigger that is supportable by the SMF. The content of the policy control request trigger that is supportable by the AMF may include at least one of the information of Table 2 below. The content of the policy control request trigger that is supportable by the SMF may include at least one of the information in Table 3 below. For example, when the policy control request trigger used by the AMF includes "Location change (tracking area)" of Table 2, this may mean that the SMF may use "Location change (serving area)" of Table 3. In another example, when the policy control request trigger used by the AMF includes "PLMN change" of Table 2, the SMF may use "PLMN change" of Table 3. As shown in the example above, determination as to whether any of the content of the policy control request trigger that can be used by the AMF is reusable as the policy control request trigger that can be used by the SMF may be made by the AMF and/or the SMF. For example, the AMF may provide, to the SMF, all of the Policy Control Request Trigger(s) for UE Policy Association that the AMF has stored, and the SMF may adopt only the content of the Policy Control Request Trigger(s) for UE Policy Association that can be used by the SMF from the Policy Control Request Trigger(s) for UE Policy Association received from the AMF. Alternatively, the AMF may select only the content that the SMF can adopt from the Policy Control Request Trigger(s) for UE Policy Association that the AMF itself has stored and provide the selected content to the SMF, and the SMF may also adopt all content received from the AMF.

1006: The SMF+PGW-C may perform a procedure for the reuse of UE Policy Association according to the request of the AMF. When the SMF+PGW-C receives the Policy Control Request Trigger(s) for UE Policy Association from the AMF, the SMF+PGW-C may store the same. More specifically, when storing the Policy Control Request Trigger(s) for UE Policy Association provided by the AMF, the SMF+PGW-C may (A) merge and store the Policy Control Request Trigger(s) for SM Policy Association if it has previously stored them, or (B) the Policy Control Request Trigger(s) for SM Policy Association is not stored, the SMF+PGW-C may store a new Policy Control Request Trigger(s) for SM Policy Association that is different from the Policy Control Request Trigger(s) for UE Policy Association, or (C) may store the policy control request trigger(s) UE Policy Association. In addition, when performing at least one of operations (A), (B), and (C) above, the SMF+PGW-C may, as described in operation 1005, store all of the Policy Control Request Trigger(s) for UE Policy Association provided by the AMF or may store the Policy Control Request Trigger(s) for UE Policy Association that the SMF+PGW-C itself can adopt from the content provided by the AMF. When the UE Policy Association is transferred to the SM-PCF (after operation 1010) and the UE is moved through TAU to the EPS (the UE moves to the EPS), if a condition corresponding to the content of the Policy Control Request Trigger(s) for UE Policy Association that the SMF+PGW-C has stored (including content stored as the Policy Control Request Trigger(s) for UE Policy Association or content stored as Policy Control Request Trigger(s) for SM Policy Association) is met, the SMF+PGW-C may report this information to the SM-PCF, and the SM-PCF may report this information to the UE-PCF again.

1007: The SMF+PGW-C may transfer, to the SM-PCF, information related to the UE Policy Association necessary for reuse of the UE Policy Association received from the AMF. More specifically, the SMF+PGW-C may transmit, to the SM-PCF, an SM Policy Association Modification Request including at least one of (a) UE-PCF ID, (b) UE Policy Association ID, and (c) Policy Control Request Trigger(s) for UE Policy Association. The content of the Policy Control Request Trigger(s) for UE Policy Association may correspond to all of the content received from the AMF in operation 1007 or all of the content stored by the SMF+PGW-C in operation 1008.

1008: The SM-PCF may request UE Policy Association Establishment or UE Policy Association Modification from the UE-PCF, based on the received UE Policy Association-related information. More specifically, the SM-PCF may receive at least one of (a) UE-PCF ID, (b) UE Policy Association ID, and (c) Policy Control Request Trigger(s) for UE Policy Association from the SMF+PGW-C, and may request the UE-PCF identified by the UE-PCF ID to change the UE Policy Association identified by the UE Policy Association ID and notify the UE-PCF that the received Policy Control Request Trigger(s) for UE Policy Association are applied to the corresponding UE Policy Association.

1009: The UE-PCF may store, as UE Policy-related information, at least one of (1) UE Policy and (2) URSP delivery in EPS Support Indication (received from the UE through the 5GS registration procedure, EPS registration procedure, EPS TAU procedure, and the like). Based on the information provided by the SM-PCF when requesting UE Policy Association Establishment/Modification, the UE-PCF may recognize that a request has been made to change the UE Policy Association identified by the UE Policy Association ID that the UE-PCF has established with the AMF to the UE Policy Association to be established with the SM-PCF, and may establish the UE Policy Association by determining whether it is appropriate for the UE-PCF to establish the UE Policy Association with the PCF, rather than the AMF, as the NF type. More specifically, when the UE-PCF has stored the URSP delivery in EPS Support Indication (received from the UE through the 5GS registration procedure, EPS registration procedure, EPS TAU procedure, and the like), the UE-PCF may determine that it is appropriate to establish the UE Policy Association with the PCF.

1010: When it is determined that the UE Policy Association with the SM-PCF is established in operation 1009, the UE-PCF may transmit a response to the UE Policy Association Establishment/Modification request to the SM-PCF. At this time, a result "success", and/or UE Policy Association-related information, and/or UE policy information may be provided. Thereafter, when a change occurs in the information related to the corresponding UE Policy Association (including UE Policy and Policy Control Request Trigger(s) for UE Policy Association), the UE-PCF may transmit this change to the SM-PCF. When a change occurs in Policy Control Request Trigger(s) for UE Policy Association, the SM-PCF may transmit this change to the SMF+PGW-C.

The content of operations 1000 to 1010 have been described based on the method shown in FIG. 4, but the content of operations 1000 to 1010 may also be applied to the method shown in FIG. 5. In this case, the content of operation 1007 may be merged into operation 1008. For example, the SMF+PGW-C may transmit a UE Policy Association Establishment/Modification request directly to the UE-PCF. Additionally, in operation 1009, the UE-PCF may recognize that a request has been made to change the UE Policy Association identified by the UE Policy Association ID that the UE-PCF has established with the AMF to the UE Policy Association to be established with the SMF+PGW-C, and may establish the UE Policy Association by determining whether it is appropriate for the UE-PCF to establish the UE Policy Association with the SMF, rather than the AMF, as the NF type. More specifically, as described in operation 1009, when the UE-PCF has stored the URSP delivery in EPS Support Indication (received from the UE through the 5GS registration procedure, EPS registration procedure, EPS TAU procedure, and the like), the UE-PCF may determine that it is appropriate to establish a UE Policy Association with the SMF. Thereafter, when a change occurs in the information related to the corresponding UE Policy Association (including UE Policy and Policy Control Request Trigger(s) for UE Policy Association), the UE-PCF may transmit this change to the SMF+PGW-C. In addition, in operation 1006, when the UE Policy Association is transferred to the SMF+PGW-C (after operation 1010) and the UE is moved through TAU to the EPS (the UE moves to the EPS), if a condition corresponding to the content of the Policy Control Request Trigger(s) for UE Policy Association that the SMF+PGW-C has stored (including content stored as the Policy Control Request Trigger(s) for UE Policy Association or stored as Policy Control Request Trigger(s) for SM Policy Association) is met, the SMF+PGW-C may report this information to the UE-PCF.

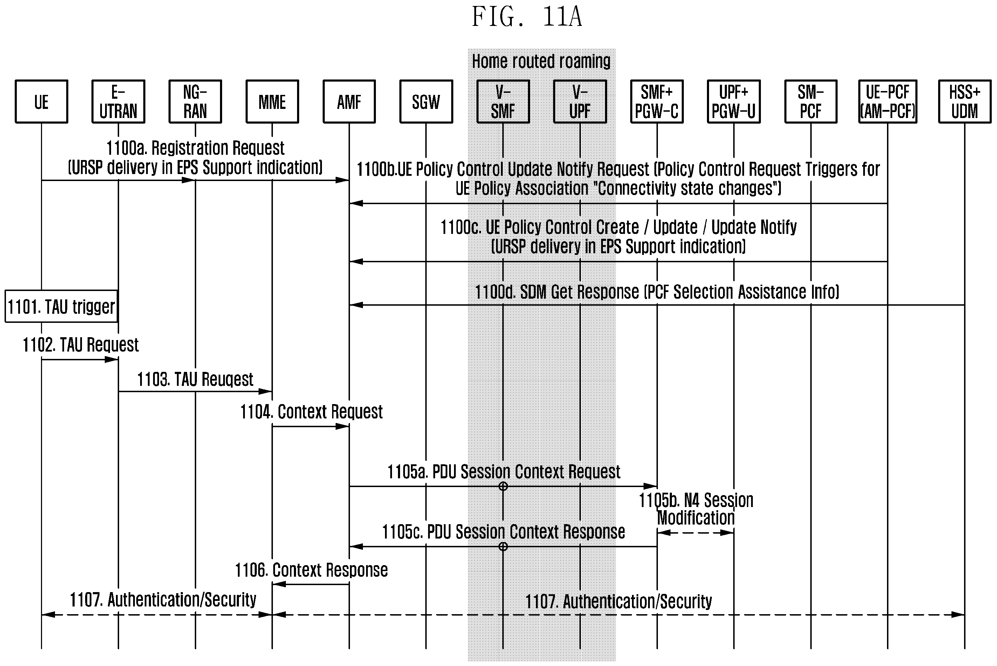

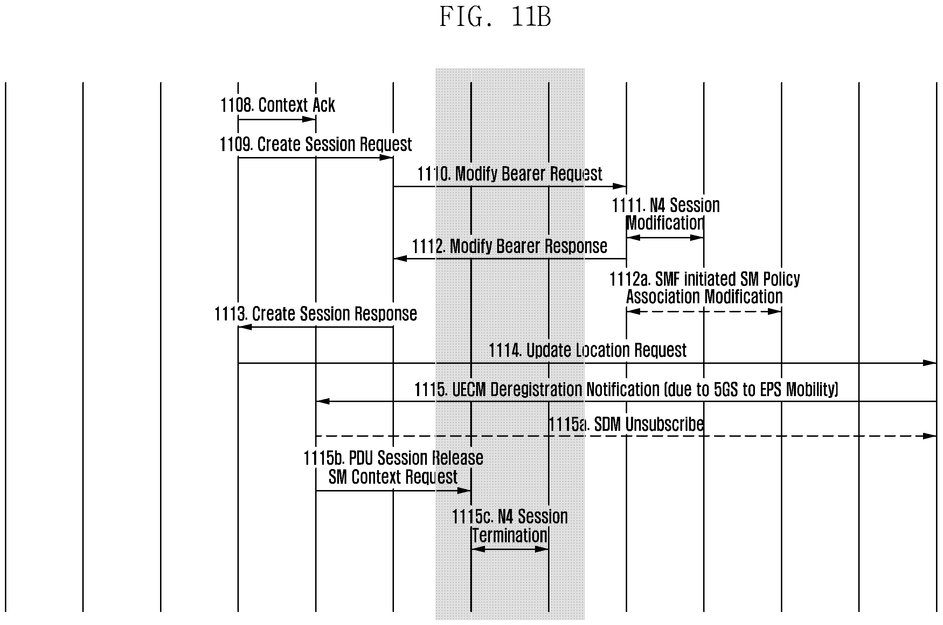

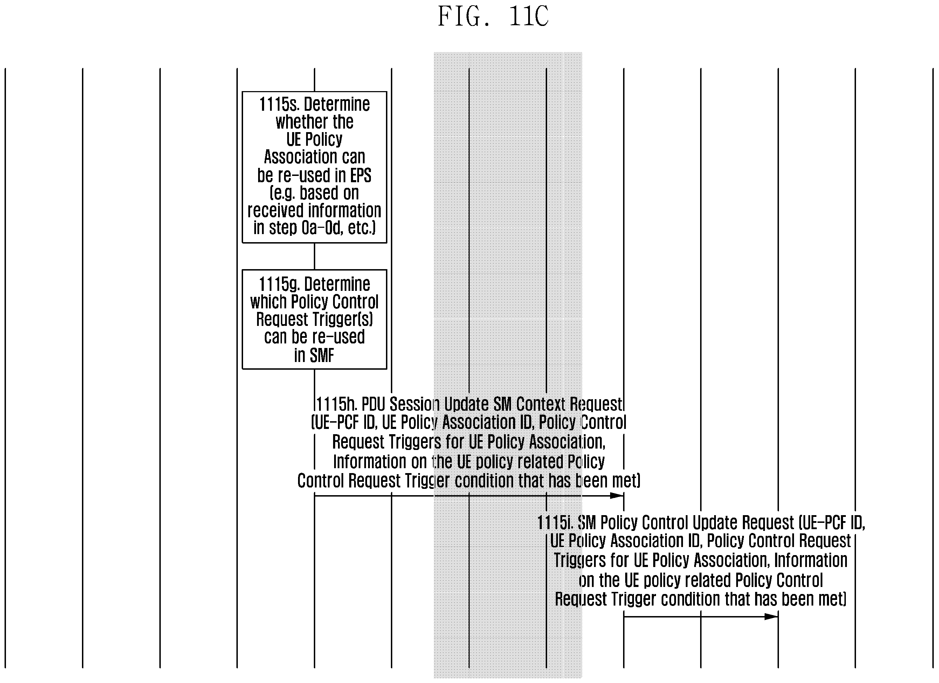

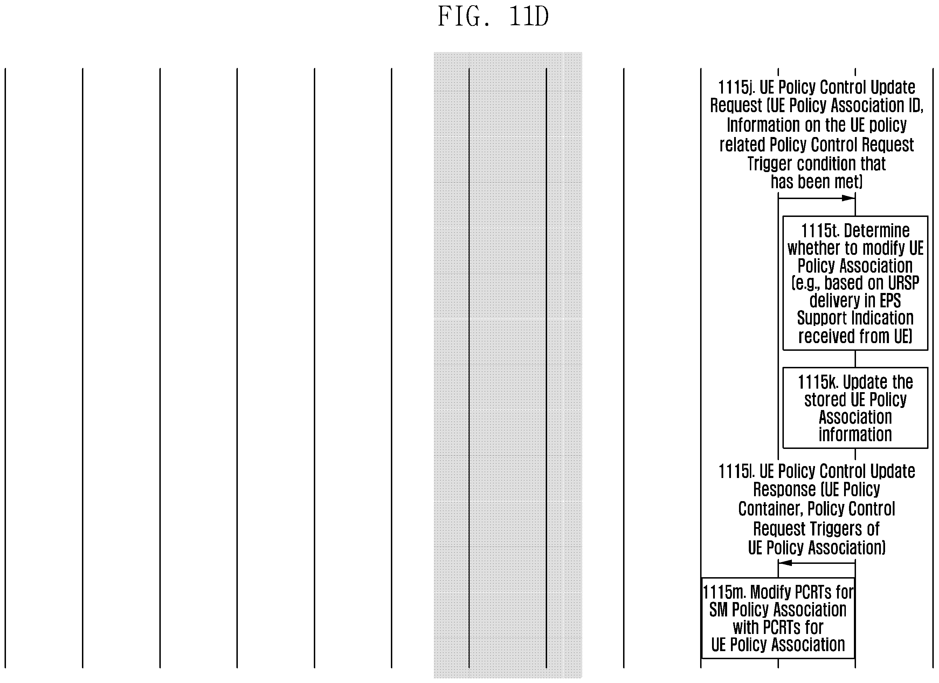

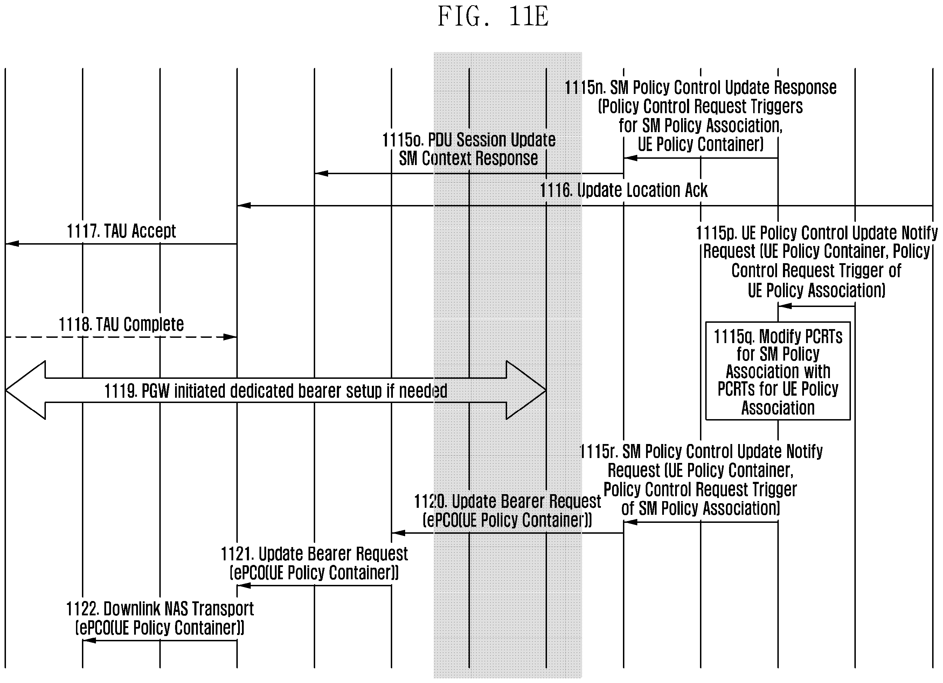

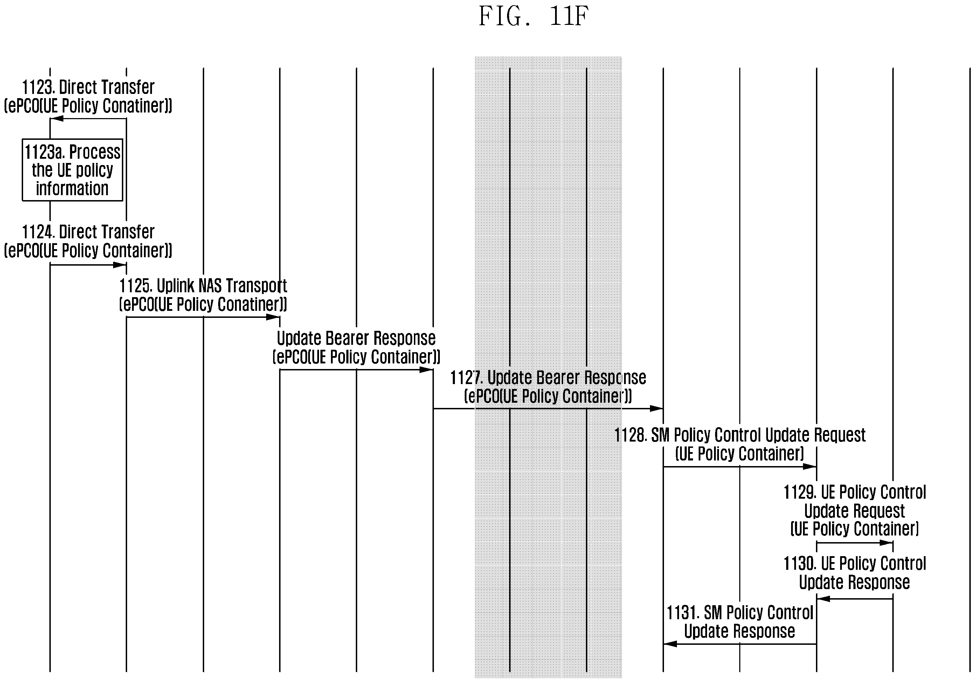

FIGS. 11A to 11F are sequence diagrams showing a method in which a core network transmits a UE policy to a UE in an EPS/5GS interworking system according to an embodiment of the disclosure.

With reference to FIGS. 11A to 11F, a method is described in which the AMF changes a connection between the UE and the PCF through a 5G NF to a connection through an EPS entity, based on a determination of the AMF during a procedure in which the UE moves from the 5GS to the EPS.

FIGS. 11A to 11F show a more specific embodiment of the embodiment described in FIGS. 4, 5, and 10. In the description below, the content described in FIG. 10 based on the method proposed with reference to FIG. 4 is first explained, and then the differences from the method shown in FIG. 5 are additionally explained. In the description of each operation of FIGS. 11A to 11F, parts that are the same as those described in FIGS. 4, 5, and 10 may be omitted. Meanwhile, depending on configurations and/or definitions in the system, not all of the operations described below need necessarily be included, and some operations may be omitted.

FIGS. 11A to 11F may include methods that can be commonly applied in the method described in FIG. 10 and may have been omitted from the description below.

1100a: The UE may transmit Registration Request to the AMF through the NG-RAN. Here, when the UE has a capability to receive a UE Policy including a URSP from the EPS, the UE may include the URSP delivery in EPS Support Indication in a UE policy container.

1100b: The UE-PCF may transmit a UE Policy control update notify request to the AMF. At this time, the UE-PCF may provide the Policy Control Request Trigger(s) for UE Policy Association that includes "Connectivity state changes" in the content of Table 2. When the UE-PCF is notified by the AMF that the UE Policy has not been successfully delivered to the UE, the UE-PCF may provide the AMF with "Connectivity state changes". When the UE is in a reachable or connected state, the AMF may provide a notification indicating the same to the UE-PCF.

1100c: When it is determined that the UE-PCF has received information (URSP delivery in EPS Support Indication) indicating that the UE has the capability to receive UE policy information including the URSP via the EPS from the UE and that the information needs to be notified to the AMF, the UE-PCF may provide the information to the AMF. The UE-PCF may provide the URSP delivery in EPS Support Indication to the AMF through UE Policy Control Create, Update, or Update Notify.

1100d: When the subscriber information includes information (PCF Selection Assistance Info) required to perform a PCF selection procedure, the HSS+UDM may provide this information to the AMF. At this time, SDM Get Response may be used. The information required when the PCF selection procedure is performed may be used in case that a PCF for the AMF (which may include the UE-PCF and/or the AM-PCF) and a PCF for the SMF (which may include the SM-PCF) should be selected as the same PCF. In this case, the PCF Selection Assistance Info may correspond to the PCF ID of the PCF for the SM.

1101: When the UE moves from a 5GS coverage area to an EPS coverage area, the UE may perform a tracking area update procedure.

1102: The UE may transmit a TAU Request to the E-UTRAN.

1103: The E-UTRAN may transfer the TAU Request received from the UE to the MME.

1104: The MME may transmit a Context Request to the AMF.

1105a: With respect to PDU session(s) to be moved to the EPS, the AMF may determine whether to retrieve context including a mapped UE EPS connection from the V-SMF (in the case of HR roaming) or to retrieve the same from the SMF+PGW-C (in the case of non-roaming or LBO roaming). According to the determination above, the AMF may receive the context by transmitting a PDU Session Context Request to the V-SMF or the SMF+PGW-C.

1105b: In the case of non-roaming or LBO roaming, when the SMF+PGW-C has never assigned CN Tunnel Info to the EPS bearer(s), the SMF may request N4 session modification from the UPF+PGW-U to establish a tunnel for each EPS bearer of the N4 session. The UPF+PGW-U may provide PGW-U Tunnel Info to the SMF+PGW-C for each EPS bearer.

1105c: The V-SMF or SMF+PGW-C may respond to the AMF by transmitting a PDU Session Context Response.

1106: The AMF may respond to the MME by transmitting a context response.

1107: Authentication and/or security-related procedures may be performed among the UE, the MME, and the HSS+UDM.

1108: The MME may transmit Context Acknowledge to the AMF. The Context Acknowledge may include a serving GW change indication indicating that a new serving GW has been selected.

1109: The MME may transmit a Create Session Request to the SGW.

1110: The SGW may transmit a Modify Bearer Request to the SMF+PGW-C.

1111: The SMF+PGW-C may perform an N4 session modification procedure with the UPF+PGW-U.

1112: The SMF+PGW-C may respond to the SGW by transmitting a Modify Bearer Response.

1113: The SGW may respond to the MME by transmitting a Create Session Response.

1114: The MME may transmit an Update Location Request to the HSS+UDM.

1115: The HSS+UDM may request a UECM Deregistration Notification from the AMF. Here, the notification may be provided on the grounds that the UE has moved from the 5GS to the EPS.

1115a: The AMF may request SDM Unsubscribe from the HSS+UDM.

1115b: In the case of HR roaming, the AMF may request release of SM context from the V-SMF.

1115c: The V-SMF may request resource release from the V-UPF. For example, the V-SMF may perform N4 session termination procedure with the V-UPF.

1115s: The AMF may determine whether the UE Policy Association used in the 5GS is reusable in the EPS after the UE moves from the 5GS to the EPS. More specifically, when at least one of operations 0a, 0b, 0c, and 0d has been performed, the AMF may determine that the UE Policy Association is reusable in the EPS, based on the information received from the UE, the UE-PCF, and the HSS+UDM. For example, when the AMF receives a "Connectivity state change" from the UE-PCF in operation 1100b, the AMF may (A) recognize that the UE-PCF has UE policy information that has not yet been delivered to the UE, (B) determine that the UE should be able to connect to the corresponding UE-PCF even after the UE has moved to the EPS, and thus (C) determine that the UE Policy Association is reusable in the EPS. In another example, when the AMF has received the URSP delivery in EPS Support Indication from the UE-PCF and has received the PCF Selection Assistance Info from the HSS+UDM, the AMF may (D) recognize that the SM-PCF and the UE-PCF correspond to the same PCF, (E) determine that the UE Policy should be received from the PCF even after the UE moves to the EPS, and thus (F) determine that the UE Policy Association is reusable in the EPS.

1115g: When policy control request trigger(s) are included in the information about the UE Policy Association, the AMF may determine whether policy control request trigger(s) are reusable in the SMF. To determine whether the policy control request trigger(s) are reusable in the SMF, the method described in FIG. 8 may be applied.

1115h: The AMF may transmit a PDU session update SM Context Request to the SMF+PGW-C. This request may correspond to a request to provide the SMF+PGW-C with the information required to reuse, in the EPS, the UE Policy Association established between the AMF and the UE-PCF. The AMF may provide information necessary for the SMF+PGW-C or SM-PCF to establish a UE Policy Association with the UE-PCF. This information may include at least one of (a) UE-PCF ID, (b) UE Policy Association ID, (c) Policy Control Trigger(s) for UE Policy Association, and (d) information on the UE policy-related Policy Control Request Trigger condition that has been met. The method described in FIG. 8 may be applied to determine or decide the content included in (c) Policy Control Trigger(s) for UE Policy Association. The (d) information on the UE policy-related Policy Control Request Trigger condition that has been met may be understood to mean that, when there is a policy control trigger that meets the conditions for the AMF to report to the UE-PCF in the content described in the (c) Policy Control Trigger(s) for UE Policy Association, the fact that the reporting condition is met and the information should be reported to the UE-PCF when the reporting condition is met.

1115i: The SMF+PGW-C may transmit an SM Policy Control Update Request to the SM-PCF. This request may correspond to a request to provide the SM-PCF with the information required to reuse, in the EPS, the UE Policy Association established between the AMF and the UE-PCF. The SMF+PGW-C may provide the information necessary for the SM-PCF to establish a UE Policy Association with the UE-PCF. This information may include at least one of (a) UE-PCF ID, (b) UE Policy Association ID, (c) Policy Control Trigger(s) for UE Policy Association, and (d) information on the UE policy-related Policy Control Request Trigger condition that has been met, which are received from the AMF in operation 1115h.

1115j: The SM-PCF may transmit a UE Policy Control Update Request to the UE-PCF. This request may correspond to a request to provide the UE-PCF with the information required to reuse, in the EPS, the UE Policy Association established between the AMF and the UE-PCF. The SM-PCF may provide information necessary for the UE-PCF to establish a UE Policy Association with the SM-PCF. This information may include at least one of (b) UE Policy Association ID, (c) Policy Control Trigger(s) for UE Policy Association, and (d) information on the UE policy-related Policy Control Request Trigger condition that has been met, which are received from the SMF+PGW-C in operation 1115i.

1115t: The UE-PCF may determine whether the UE Policy Association has been modified. More specifically, the UE-PCF may determine that the modification has been made, based on whether the URSP delivery in EPS Support Indication indicating that the UE is able to receive the UE Policy including the URSP from the EPS has been received from the UE through procedures such as "0a" and "0b" described in FIGS. 9A to FIGS. 9F.

1115k: The UE-PCF may update the stored UE Policy Association information, based on the information received from the SM-PCF in operation 1115j. The UE-PCF may generate a new UE Policy or update an existing UE Policy. Additionally, in case that the condition of (d) information on the UE policy-related Policy Control Request Trigger condition that has been met is satisfied in operation 1115j, the UE-PCF may generate a new UE Policy or update an existing UE Policy. The UE-PCF may generate new Policy Control Trigger(s) for UE Policy Association or update existing Policy Control Trigger(s) for UE Policy Association. Additionally, in case that (c) Policy Control Trigger(s) for UE Policy Association is received in operation 1115j, the UE-PCF may update the received (c) Policy Control Trigger(s) for UE Policy Association.

1115l: The UE-PCF may respond to the SM-PCF by transmitting a UE Policy Control Update Response. This response may mean that the UE Policy Association that has been established with the AMF has been changed to be established with the SM-PCF, and that in the future, if there is any change in information related to the UE Policy Association or in the UE Policy (which may include URSP) (operation 1115p), it is possible for the UE-PCF to provide this change to the SM-PCF. The UE-PCF may provide, to the SM-PCF, at least one of the UE policy container including a UE Policy (which may include URSP) and the Policy Control Request Trigger(s) of UE Policy Association.

1115m: The SM-PCF may store information received from the UE-PCF. When receiving the Policy Control Request Trigger(s) of UE Policy Association from the UE-PCF in operation 1115l, the SM-PCF may modify the Policy Control Request Trigger(s) of UE Policy Association that the SM-PCF already has (which may be information received from the SMF+PGW-C in operation 1115i), by using the received Policy Control Request Trigger(s) of UE Policy Association.

1115n: The SM-PCF may transmit an SM Policy Control Update Response to the SMF+PGW-C. This response may include at least one of the Policy Control Request Trigger(s) of SM Policy Association to be used by the SMF+PGW-C and the UE policy container received from the UE-PCF. The Policy Control Request Trigger(s) of SM Policy Association may include the Policy Control Request Trigger(s) of UE Policy Association received from the UE-PCF. The SM-PCF may also provide the Policy Control Request Trigger(s) of UE Policy Association separately from the Policy Control Request Trigger(s) of SM Policy Association.

1115o: The SMF+PGW-C may transmit a PDU Session Update SM Context Response to the AMF. This response may include information indicating that the UE Policy Association has been successfully transferred to the SM-PCF.

1115p: When a change occurs in the information related to the UE Policy Association or UE Policy (which may include URSP), the UE-PCF may provide this change to the SM-PCF. The UE-PCF may provide, to the SM-PCF, at least one of the UE policy container including a UE Policy (which may include URSP) and the Policy Control Request Trigger(s) of UE Policy Association.

1115q: The SM-PCF may store information received from the UE-PCF. When receiving the Policy Control Request Trigger(s) of UE Policy Association from the UE-PCF in operation 1115p, the SM-PCF may modify the Policy Control Request Trigger(s) of UE Policy Association that the SM-PCF already has, by using the received Policy Control Request Trigger(s) of UE Policy Association.

1115r: The SM-PCF may transmit an SM Policy Control Update Notify Request to the SMF+PGW-C. This request may include at least one of the Policy Control Request Trigger(s) of SM Policy Association to be used by the SMF+PGW-C and the UE policy container received from the UE-PCF. The Policy Control Request Trigger(s) of SM Policy Association may include the Policy Control Request Trigger(s) of UE Policy Association received from the UE-PCF. The SM-PCF may also provide the Policy Control Request Trigger(s) of UE Policy Association separately from the Policy Control Request Trigger(s) of SM Policy Association.

1116: The HSS+UDM may transmit Update Location Ack to the MME.

1117: The MME may transmit TAU Accept to the UE.

1118: The UE may transmit TAU Complete to the MME.

1119: When necessary, a dedicated bearer setup initiated by the PGW may be performed.

1120: When receiving the UE policy container from the UE-PCF (this may include receiving the UE policy container from the SM-PCF in operations 1115n and 1115r), the SMF+PGW-C may provide ePCO (or PCO) including the UE policy container to the SGW. Here, the ePCO (or PCO) may be provided through an update bearer request.

1121: The SGW may transfer the ePCO (or PCO) including the UE policy container received from the SMF+PGW-C to the MME. Here, the ePCO (or PCO) may be transferred through the Update Bearer Request.

1122: The MME may transfer the ePCO (or PCO) including the UE policy container received from the SGW to the E-UTRAN. In this case, a downlink NAS transport request may be used.

1123: The E-UTRAN may transfer the ePCO (or PCO) including the UE policy container received from the MME to the UE. In this case, direct transfer may be used.

1123a: The UE may perform operations required for processing of a UE Policy (which may include URSP), based on the information included in the UE policy container received from the UE-PCF. More specifically, the UE may store a URSP or update an existing URSP.

1124: The UE may include UE Policy-related information to be provided to the UE-PCF in the UE policy container and then include the UE policy container in the ePCO (or PCO) to provide the same to the E-UTRAN. In this case, direct transfer may be used.

1125: The E-UTRAN may transfer the ePCO (or PCO) including the UE policy container received from the UE to the MME. In this case, uplink NAS transfer may be used.

1126: The MME may transfer the ePCO (or PCO) including the UE policy container received from the E-UTRAN to the SGW. In this case, an Update Bearer Response may be used.

1127: The SGW may transfer the ePCO (or PCO) including the UE policy container received from the MME to the SMF+PGW-C. In this case, the Update Bearer Response may be used.

1128: The SMF+PGW-C may transfer the ePCO (or PCO) including the UE policy container received from the SGW to the SM-PCF. In this case, an SM Policy Control Update Request may be used.

1129: The SM-PCF may transfer the ePCO (or PCO) including the UE policy container received from the SMF+PGW-C to the UE-PCF. In this case, the UE Policy Control Update Request may be used.

1130: The UE-PCF may transmit a UE Policy Control Update Response to the SM-PCF.

1131: The SM-PCF may transmit an SM Policy Control Update Response to the SMF+PGW-C.

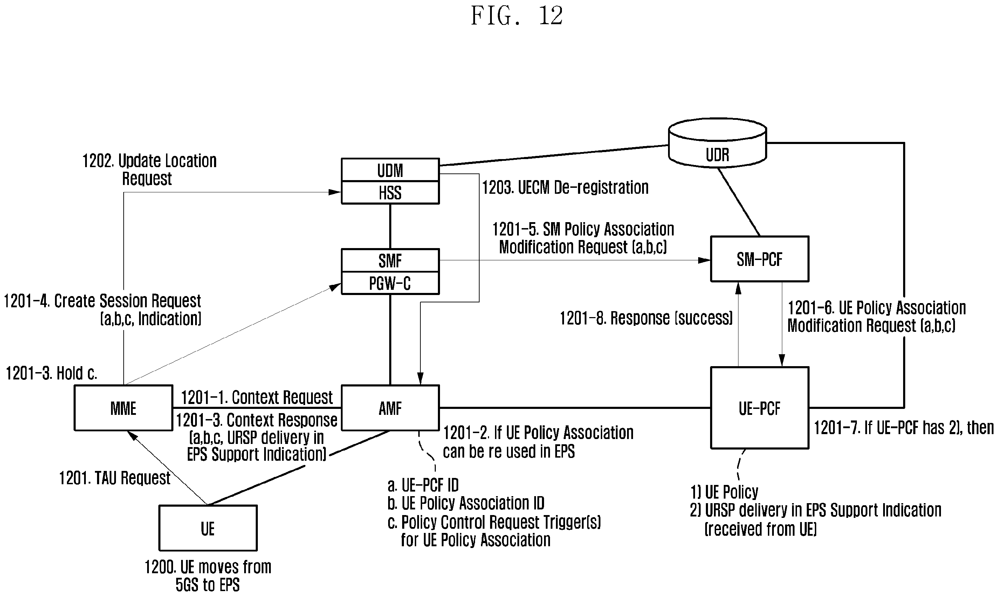

FIG. 12 illustrates a method in which a core network transfers a UE policy to a UE in an EPS/5GS interworking system according to an embodiment of the disclosure.

Referring to FIG. 12, a method is described in which an MME changes a connection between the UE and the PCF through a 5G NF to a connection through an EPS entity, based on a determination of the AMF during a procedure in which the UE moves from the 5GS to the EPS.

FIG. 12 shows a more specific embodiment of the embodiment described in FIGS. 4 and 5. The following description first refers to the method shown in FIG. 4, and then the differences from the method shown in FIG. 5 are additionally explained. FIG. 12 may include methods that can be commonly applied in the methods described in FIGS. 8 and 10 and may have been omitted from the description below. Meanwhile, depending on the configurations and/or definitions in the system, not all of the operations described below need necessarily be included, and some operations may be omitted.

1200: The UE may move from the 5GS to the EPS.

1201: The UE may transmit a tracking area update (TAU) request to an MME through an eNodeB.

1201-1: The MME may transmit a Context Request to the AMF.

1201-2: The AMF may determine whether a UE Policy Association is reusable in the EPS. More specifically, the AMF may store, as information related to the UE Policy, at least one of (a) UE-PCF ID, (b) UE Policy Association ID, and (c) Policy Control Request Trigger(s) for UE Policy Association. The AMF may determine whether the UE Policy Association identified by the UE Policy Association ID established with the UE-PCF identified by the UE-PCF ID can be moved to the EPS.

1201-3: The AMF may transmit a context response to the MME. To enable the reuse of the UE Policy Association established between the AMF and the UE-PCF in the EPS, the AMF may provide at least one of (a) UE-PCF ID, (b) UE Policy Association ID, (c) Policy Control Request Trigger(s) for UE Policy Association, and (d) URSP delivery in EPS Support Indication. When the AMF provides the Policy Control Request Trigger(s) for UE Policy Association to the MME, the AMF may provide some or all of the Policy Control Request Trigger(s) for UE Policy Association that the AMF itself has stored, or a transformation of some or all of the same. This providing may be determined depending on whether the content of the policy control request trigger that AMF can support is supportable by the MME. The content of the policy control request trigger that is supportable by the AMF may include at least one of the information of Table 2 below. For example, when the policy control request trigger used by the AMF includes "Location change (tracking area)" of Table 2, the MME may determine to support the identification of changes in the tracking area supported by the E-UTRAN. As shown in the example above, determination as to whether any of the content of the policy control request trigger that can be used by the AMF is reusable as the policy control request trigger that can be used by the MME may be made by the AMF and/or the MME. For example, the AMF may provide, to the MME, all of the Policy Control Request Trigger(s) for UE Policy Association that the AMF has stored, and the MME may adopt only the content of the Policy Control Request Trigger(s) for UE Policy Association that can be used by the MME from the Policy Control Request Trigger(s) for UE Policy Association received from the AMF. Alternatively, the AMF may select only the content that the MME can adopt from the Policy Control Request Trigger(s) for UE Policy Association that the AMF itself has stored and provide the selected content to the MME, and the MME may also adopt all content received from the AMF. The MME may store the information received from the AMF. When the UE Policy Association is transferred to the SM-PCF (after operation 1201-8) and the UE is moved through TAU to the EPS (the UE moves to the EPS), if a condition corresponding to the content of the Policy Control Request Trigger(s) for UE Policy Association that the MME itself has stored is met, the MME may report this information to the SM-PCF, and the SM-PCF may report this information to the UE-PCF again.

1201-4: The MME may establish a connection with the SMF+PGW-C through the SGW, based on the context information received from the AMF. To enable the reuse of the UE Policy Association established between the AMF and the UE-PCF in the EPS, the MME may provide, to the SMF+PGW-C, at least one of (a) UE-PCF ID, (b) UE Policy Association ID, (c) Policy Control Request Trigger(s) for UE Policy Association, and (d) URSP delivery in EPS Support Indication, which are received from the AMF in operation 1201-3.

1201-5: The SMF+PGW-C may perform a procedure for the reuse of UE Policy Association according to the request of the MME. The SMF+PGW-C may transfer, to the SM-PCF, information related to the UE Policy Association necessary for reuse of the UE Policy Association received from the MME. More specifically, the SMF+PGW-C may provide, to the SM-PCF, at least one of (a) UE-PCF ID, (b) UE Policy Association ID, and (c) Policy Control Request Trigger(s) for UE Policy Association, and transmit the SM Policy Association Modification Request to the SM-PCF. The content of the Policy Control Request Trigger(s) for UE Policy Association may correspond to all of the content received from the AMF in operation 1201-3 or all of the content stored by the MME.

1201-6: The SM-PCF may request UE Policy Association Establishment or UE Policy Association Modification from the UE-PCF, based on the received UE Policy Association-related information. More specifically, the SM-PCF may receive at least one of (a) UE-PCF ID, (b) UE Policy Association ID, and (c) Policy Control Request Trigger(s) for UE Policy Association from the SMF+PGW-C, and may request the UE-PCF identified by the UE-PCF ID to change the UE Policy Association identified by the UE Policy Association ID and notify the UE-PCF that the received Policy Control Request Trigger(s) for UE Policy Association are applied to the corresponding UE Policy Association.

1201-7: The UE-PCF may store, as UE Policy-related information, at least one of (1) UE Policy and (2) URSP delivery in EPS Support Indication (received from the UE through the 5GS registration procedure, EPS registration procedure, EPS TAU procedure, and the like). Based on the information provided by the SM-PCF when requesting UE Policy Association Establishment/Modification, the UE-PCF may recognize that a request has been made to change the UE Policy Association identified by the UE Policy Association ID that the UE-PCF has established with the AMF to the UE Policy Association to be established with the SM-PCF, and may establish the UE Policy Association by determining whether it is appropriate for the UE-PCF to establish the UE Policy Association with the PCF, rather than the AMF, as the NF type. More specifically, when the UE-PCF has stored the URSP delivery in EPS Support Indication (received from the UE through the 5GS registration procedure, EPS registration procedure, EPS TAU procedure, and the like), the UE-PCF may determine that it is appropriate to establish the UE Policy Association with the PCF.

1201-8: When it is determined that the UE Policy Association with the SM-PCF is established in operation 1209, the UE-PCF may transmit a response to the UE Policy Association Establishment/Modification request to the SM-PCF. At this time, a result "success", and/or UE Policy Association-related information, and/or UE policy information may be provided. Thereafter, when a change occurs in the information related to the corresponding UE Policy Association (including UE Policy and Policy Control Request Trigger(s) for UE Policy Association), the UE-PCF may transmit this change to the SM-PCF. When a change occurs in Policy Control Request Trigger(s) for UE Policy Association, the SM-PCF may transfer this change to the MME.

1202: The MME may transmit an update location request to the UDM+HSS.

1203: The UDM+HSS may transmit an AMF de-registration request to the AMF as a serving AMF which is in charge of UE mobility management in the 5GS.

The content of operations 1200 to 1203 have been described based on the method shown in FIG. 4, but the content of operations 1200 to 1203 may also be applied to the method shown in FIG. 5. In this case, the content of operation 1201-5 may be merged into operation 1201-6. For example, the SMF+PGW-C may transmit a UE Policy Association Establishment/Modification request directly to the UE-PCF. Additionally, in operation 1201-7, the UE-PCF may recognize that a request has been made to change the UE Policy Association identified by the UE Policy Association ID that the UE-PCF has established with the AMF to the UE Policy Association to be established with the SMF+PGW-C, and may establish the UE Policy Association by determining whether it is appropriate for the UE-PCF to establish the UE Policy Association with the SMF, rather than the AMF, as the NF type. More specifically, as described in operation 1201-7, when the UE-PCF has stored the URSP delivery in EPS Support Indication (received from the UE through the 5GS registration procedure, EPS registration procedure, EPS TAU procedure, and the like), the UE-PCF may determine that it is appropriate to establish a UE Policy Association with the SMF. Thereafter, when a change occurs in the information related to the corresponding UE Policy Association (including UE Policy and Policy Control Request Trigger(s) for UE Policy Association), the UE-PCF may transfer this change to the SMF+PGW-C and the MME. In addition, in operation 1201-3, when the UE Policy Association is transferred to the SMF+PGW-C (after operation 1201-8) and the UE is moved through TAU to the EPS (the UE moves to the EPS), if a condition corresponding to the content of the Policy Control Request Trigger(s) for UE Policy Association that the MME has stored is met, the MME may report this information to the UE-PCF via the SMF+PGW-C.

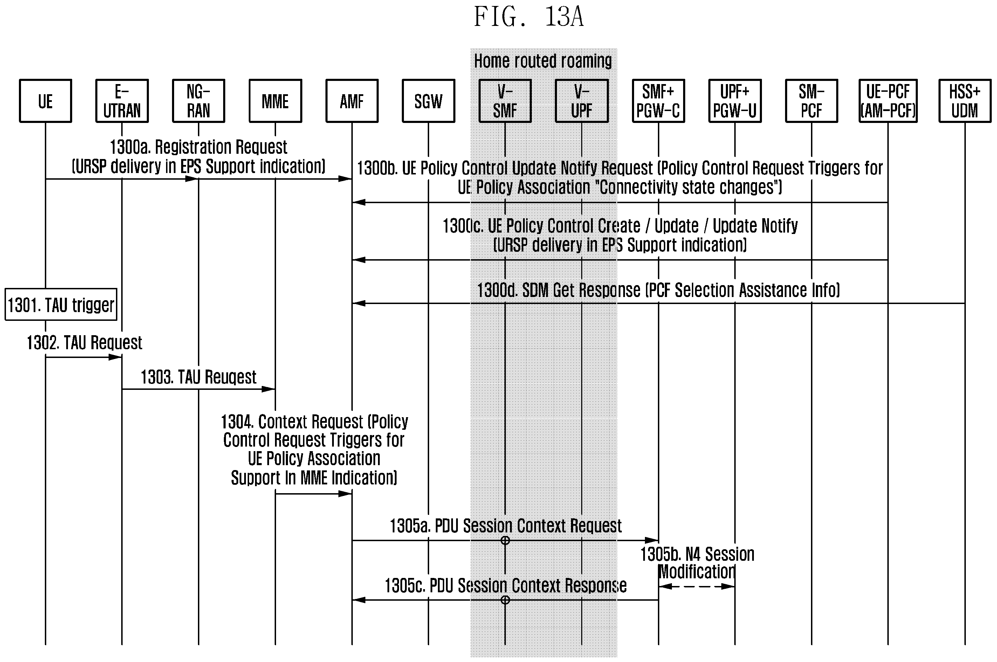

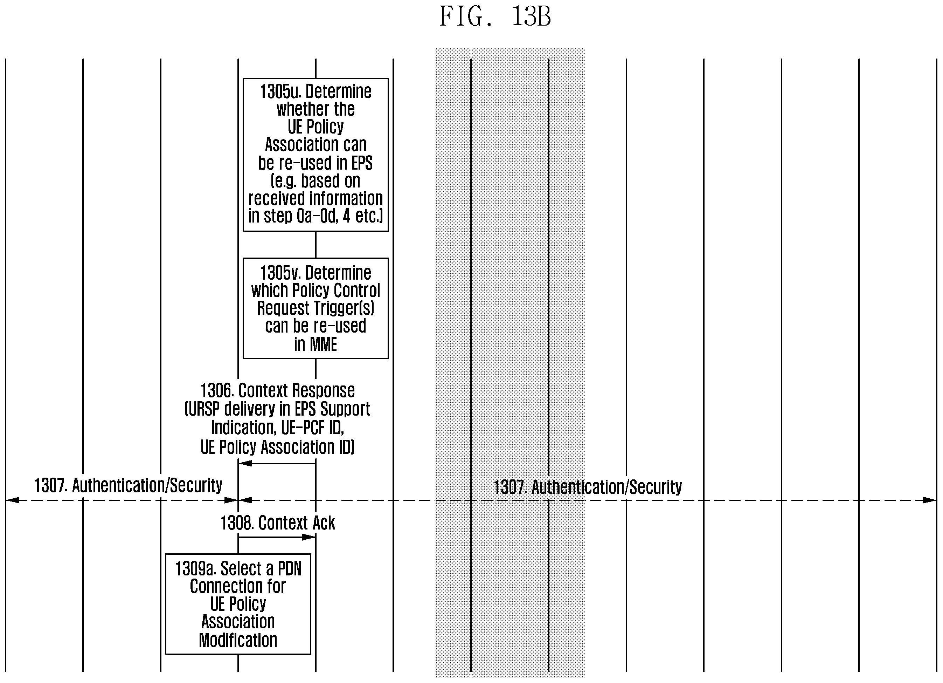

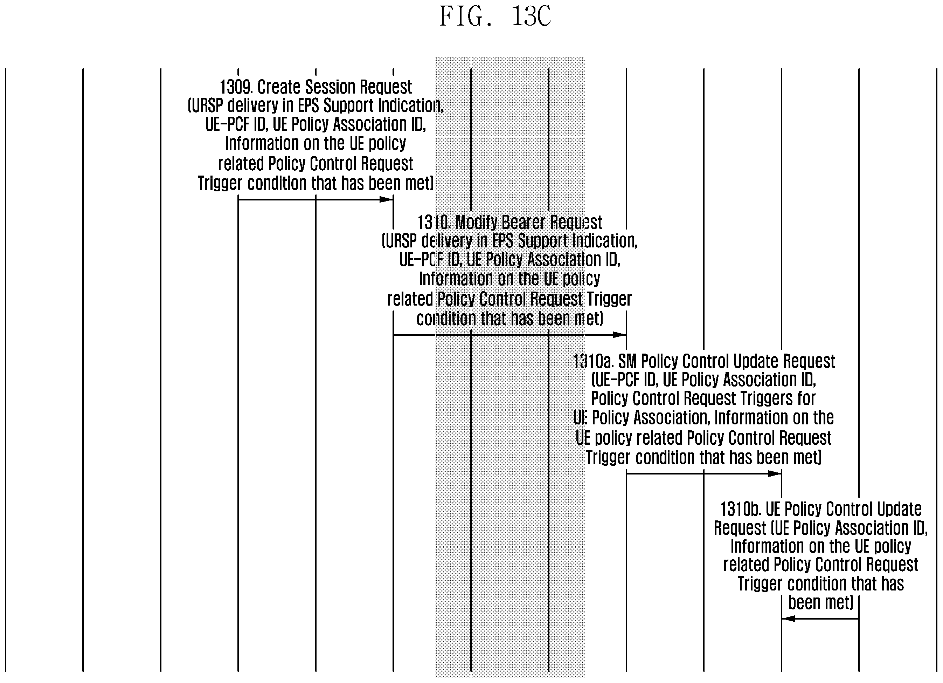

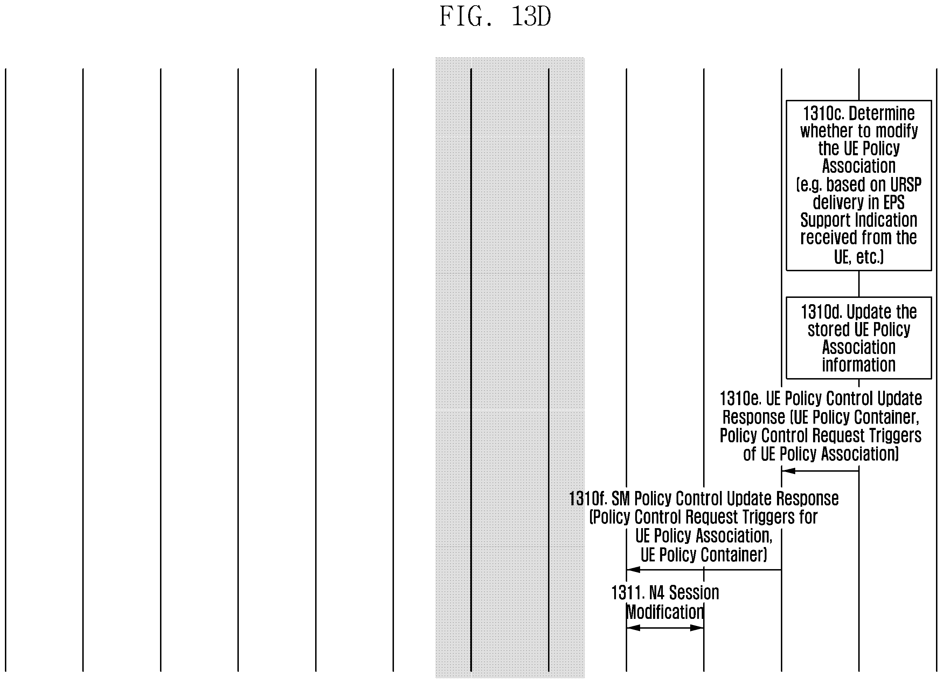

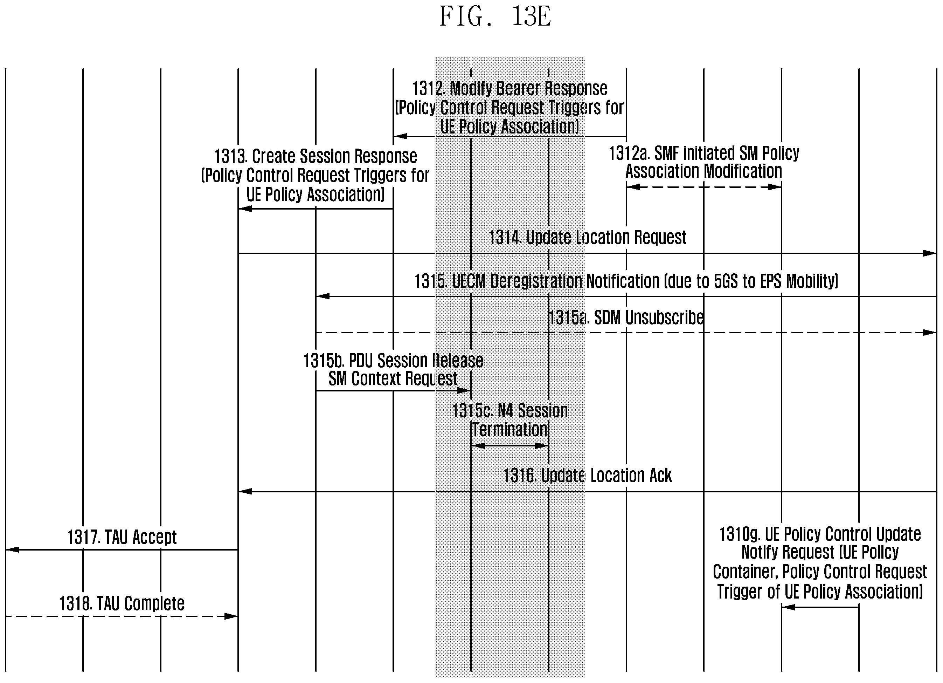

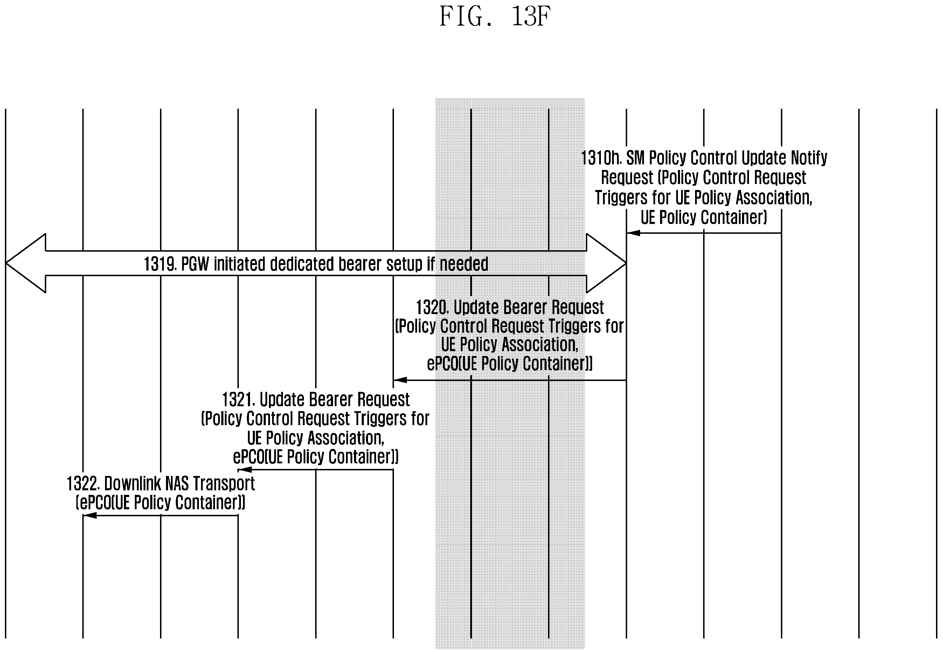

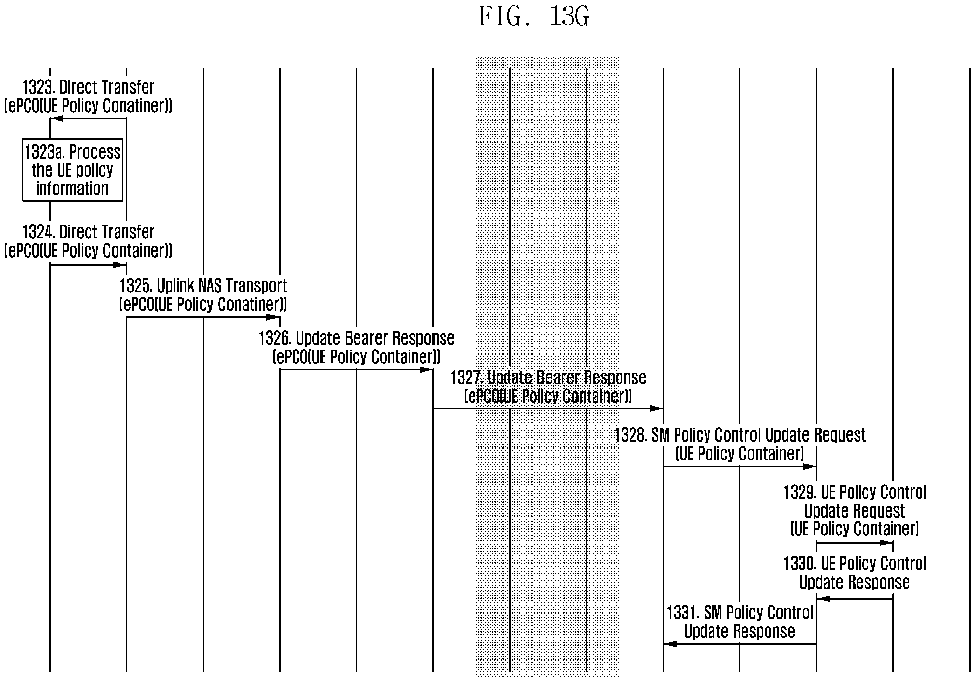

FIGS. 13A to 13G are sequence diagrams illustrating a method in which a core network transfers a UE policy to a UE in an EPS/5GS interworking system according to an embodiment of the disclosure.

With reference to FIGS. 13A to 13G, a method is described in which the MME changes a connection between the UE and the PCF through a 5G NF to a connection through an EPS entity, based on a determination of the AMF during a procedure in which the UE moves from the 5GS to the EPS.

FIGS. 13A to 13G show a more specific embodiment of the embodiment described in FIGS. 4, 5, and 12. In the description below, the content described in FIG. 12 based on the method proposed with reference to FIG. 4 is first explained, and then the differences from the method shown in FIG. 5 are additionally explained. In the description of each operation of FIGS. 13A to 13G, parts that are the same as those described in FIGS. 4, 5, and 12 may be omitted. Meanwhile, depending on configurations and/or definitions in the system, not all of the operations described below need necessarily be included, and some operations may be omitted.

FIGS. 13A to 13G may include methods that can be commonly applied in the method described in FIGS. 10 and 12, and may have been omitted from the description below.

1300a: The UE may transmit Registration Request to the AMF through the NG-RAN. Here, when the UE has a capability to receive a UE Policy including a URSP from the EPS, the UE may include the URSP delivery in EPS Support Indication in a UE policy container.

1300b: The UE-PCF may transmit a UE Policy control update notify request to the AMF. At this time, the UE-PCF may provide the Policy Control Request Trigger(s) for UE Policy Association that includes "Connectivity state changes" in the content of Table 2. When the UE-PCF is notified by the AMF that the UE Policy has not been successfully delivered to the UE, the UE-PCF may provide the AMF with "Connectivity state changes". When the UE is in a reachable or connected state, the AMF may provide a notification indicating the same to the UE-PCF.

1300c: When it is determined that the UE-PCF has received information (URSP delivery in EPS Support Indication) indicating that the UE has the capability to receive UE policy information including the URSP via the EPS from the UE and that the information needs to be notified to the AMF, the UE-PCF may provide the information to the AMF. The UE-PCF may provide the URSP delivery in EPS Support Indication to the AMF through UE Policy Control Create, Update, or Update Notify.

1300d: When the subscriber information includes information (PCF Selection Assistance Info) required to perform a PCF selection procedure, the HSS+UDM may provide this information to the AMF. At this time, SDM Get Response may be used. The information required when the PCF selection procedure is performed may be used in case that a PCF for the AMF (which may include the UE-PCF and/or the AM-PCF) and a PCF for the SMF (which may include the SM-PCF) should be selected as the same PCF. In this case, the PCF Selection Assistance Info may correspond to the PCF ID of the PCF for the SM.

1301: When the UE moves from a 5GS coverage area to an EPS coverage area, the UE may perform a tracking area update procedure.

1302: The UE may transmit a TAU Request to the E-UTRAN.

1303: The E-UTRAN may transfer the TAU Request received from the UE to the MME.

1304: The MME may transmit a Context Request to the AMF. The MME may also provide the AMF with an indicator (policy control triggers for UE Policy Association support in MME indication) that the MME is capable of handling policy control triggers for UE Policy Association.

1305a: With respect to PDU session(s) to be moved to the EPS, the AMF may determine whether to retrieve context including a mapped UE EPS connection from the V-SMF (in the case of HR roaming) or to retrieve the same from the SMF+PGW-C (in the case of non-roaming or LBO roaming). According to the determination above, the AMF may receive the context by transmitting a PDU Session Context Request to the V-SMF or the SMF+PGW-C.

1305b: In the case of non-roaming or LBO roaming, when the SMF+PGW-C has never assigned CN Tunnel Info to the EPS bearer(s), the SMF may request N4 session modification from the UPF+PGW-U to establish a tunnel for each EPS bearer of the N4 session. The UPF+PGW-U may provide PGW-U Tunnel Info to the SMF+PGW-C for each EPS bearer.

1305c: The V-SMF or SMF+PGW-C may respond to the AMF by transmitting a PDU Session Context Response.

13015u: The AMF may determine whether the UE Policy Association used in the 5GS is reusable in the EPS after the UE moves from the 5GS to the EPS. More specifically, when at least one of operations 0a, 0b, 0c, 0d, and 4 has been performed, the AMF may determine that the UE Policy Association is reusable in the EPS, based on the information received from the UE, the UE-PCF, and the HSS+UDM. For example, when the AMF receives a "Connectivity state change" from the UE-PCF in operation 1300b, the AMF may (A) recognize that the UE-PCF has UE policy information that has not yet been delivered to the UE, (B) determine that the UE should be able to connect to the corresponding UE-PCF even after the UE has moved to the EPS, and thus (C) determine that the UE Policy Association is reusable in the EPS. In another example, when the AMF has received the URSP delivery in EPS Support Indication from the UE-PCF and has received the PCF Selection Assistance Info from the HSS+UDM, the AMF may (D) recognize that the SM-PCF and the UE-PCF correspond to the same PCF, (E) determine that the UE Policy should be received from the PCF even after the UE moves to the EPS, and thus (F) determine that the UE Policy Association is reusable in the EPS.

13015v: When policy control request trigger(s) are included in the information about the UE Policy Association, the AMF may determine whether policy control request trigger(s) are reusable in the MME. When the AMF has received the policy control request triggers for UE Policy Association support in MME indication from the MME in operation 1304, the AMF may determine that the same is reusable in the MME. More specifically, the method described in FIG. 12 may be used.

1306: The AMF may respond to the MME by transmitting a context response. The AMF may provide, to the MME, at least one of (a) UE-PCF ID, (b) UE Policy Association ID, (c) Policy Control Trigger(s) for UE Policy Association, (d) information on the UE policy-related Policy Control Request Trigger condition that has been met, and (e) URSP delivery in EPS Support Indication. The (d) information on the UE policy-related Policy Control Request Trigger condition that has been met may be understood to mean that, when there is a policy control trigger that meets the conditions for the AMF to report to the UE-PCF in the content described in the (c) Policy Control Trigger(s) for UE Policy Association, the fact that the reporting condition is met and the information should be reported to the UE-PCF when the reporting condition is met.

1307: Authentication and/or security-related procedures may be performed among the UE, the MME, and the HSS+UDM.

1308: The MME may transmit Context Acknowledge to the AMF. The Context Acknowledge may include a serving GW change indication indicating that a new serving GW has been selected.

1309a: The MME may select a PDN Connection to move the UE Policy Association.

1309: The MME may transmit a Create Session Request to the SGW. The MME may provide to the SGW at least one of (a) UE-PCF ID, (b) UE Policy Association ID, (c) Policy Control Trigger(s) for UE Policy Association, (d) information on the UE policy-related Policy Control Request Trigger condition that has been met, and (e) URSP delivery in EPS Support Indication.

1310: The SGW may transmit a Modify Bearer Request to the SMF+PGW-C. The SGW may provide to the SMF+PGW-C at least one of (a) UE-PCF ID, (b) UE Policy Association ID, (c) Policy Control Trigger(s) for UE Policy Association, (d) information on the UE policy-related Policy Control Request Trigger condition that has been met, (e) URSP delivery in EPS Support Indication.

1310a: The SMF+PGW-C may transmit an SM Policy Control Update Request to the SM-PCF. This request may correspond to a request to provide the SM-PCF with the information required to reuse, in the EPS, the UE Policy Association established between the AMF and the UE-PCF. The SMF+PGW-C may provide the information necessary for the SM-PCF to establish a UE Policy Association with the UE-PCF. This information may include at least one of (a) UE-PCF ID, (b) UE Policy Association ID, (c) Policy Control Trigger(s) for UE Policy Association, and (d) information on the UE policy-related Policy Control Request Trigger condition that has been met, which are received from the SGW in operation 1310.

1310b: The SM-PCF may transmit a UE Policy Control Update Request to the UE-PCF. This request may correspond to a request to provide the UE-PCF with the information required to reuse, in the EPS, the UE Policy Association established between the AMF and the UE-PCF. The SM-PCF may provide information required for the UE-PCF to establish a UE Policy Association with the SM-PCF. This information may include at least one of (b) UE Policy Association ID, (c) Policy Control Trigger(s) for UE Policy Association, and (d) information on the UE policy-related Policy Control Request Trigger condition that has been met, which are received from the SMF+PGW-C in operation 1310a.

1310c: The UE-PCF may determine whether the UE Policy Association has been modified. More specifically, the UE-PCF may determine that the modification has been made, based on whether the URSP delivery in EPS Support Indication indicating that the UE is able to receive the UE Policy including the URSP from the EPS has been received from the UE through procedures such as "0a" and "0b" described in FIGS. 9A to 9F.

1310d: The UE-PCF may update the stored UE Policy Association information, based on the information received from the SM-PCF in operation 1310b. The UE-PCF may generate a new UE Policy or update an existing UE Policy. Additionally, in case that the condition of (d) information on the UE policy-related Policy Control Request Trigger condition that has been met is satisfied in operation 1310b, the UE-PCF may generate a new UE Policy or update an existing UE Policy. The UE-PCF may generate new Policy Control Trigger(s) for UE Policy Association or update existing Policy Control Trigger(s) for UE Policy Association. Additionally, in case that (c) Policy Control Trigger(s) for UE Policy Association is received in operation 1310b, the UE-PCF may update the received (c) Policy Control Trigger(s) for UE Policy Association.

1310e: The UE-PCF may respond to the SM-PCF by transmitting a UE Policy Control Update Response. This response may mean that the UE Policy Association that has been established with the AMF has been changed to be established with the SM-PCF, and that in the future, if there is any change in information related to the UE Policy Association or in the UE Policy (which may include URSP) (operation 1310g), it is possible for the UE-PCF to provide this change to the SM-PCF. The UE-PCF may provide, to the SM-PCF, at least one of the UE policy container including a UE Policy (which may include URSP) and the Policy Control Request Trigger(s) of UE Policy Association.

1310f: The SM-PCF may transmit an SM Policy Control Update Response to the SMF+PGW-C. The SM-PCF may provide, to the SMF+PGW-C, at least one of the UE policy container including a UE Policy (which may include a URSP) and the Policy Control Request Trigger(s) of UE Policy Association.

1310g: When a change occurs in the information related to the UE Policy Association or UE Policy (which may include URSP), the UE-PCF may provide this change to the SM-PCF. The UE-PCF may provide, to the SM-PCF, at least one of the UE policy container including a UE Policy (which may include URSP) and the Policy Control Request Trigger(s) of UE Policy Association.

1310h: The SM-PCF may transmit an SM Policy Control Update Notify Request to the SMF+PGW-C. This request may include at least one of the Policy Control Request Trigger(s) of UE Policy Association and the UE policy container received from the UE-PCF.

1311: The SMF+PGW-C may perform the N4 session modification procedure with the UPF+PGW-U.

1312: The SMF+PGW-C may respond to the SGW by transmitting a Modify Bearer Response. When the SMF+PGW-C has received the Policy Control Request Trigger(s) of UE Policy Association in operation 1310f, the SMF+PGW-C may transfer the same to the SGW.

1313: The SGW may respond to the MME by transmitting a Create Session Response. When the SGW receives the Policy Control Request Trigger(s) of UE Policy Association in operation 1312, the SGW may transfer the same to the MME. When the MME receives the Policy Control Request Trigger(s) of UE Policy Association, the MME may modify the Policy Control Request Trigger(s) of UE Policy Association that the MME already has (which may include the one received from the AMF in operation 1306) by using the received Policy Control Request Trigger(s) of UE Policy Association.

1314: The MME may transmit an Update Location Request to the HSS+UDM.

1315: The HSS+UDM may transmit a UECM Deregistration Notification to the AMF. This may be provided for the reason that the UE is moving (or has moved) from 5GS to EPS.

1315a: The AMF may transmit SDM Unsubscribe to the HSS+UDM.

1315b: In the case of HR roaming, the AMF may request the V-SMF to release the SM context.

1315c: The V-SMF may request the V-UPF to perform resource release. For example, V-SMF may perform an N4 session termination procedure with the V-UPF.

1315n: The response may include at least one of the Policy Control Request Trigger(s) of SM Policy Association to be used by the SMF+PGW-C and the UE policy container received from the UE-PCF. The Policy Control Request Trigger(s) of SM Policy Association may include the Policy Control Request Trigger(s) of UE Policy Association received from the UE-PCF. The SM-PCF may provide the Policy Control Request Trigger(s) of UE Policy Association separately from the Policy Control Request Trigger(s) of SM Policy Association.

1315o: The SMF+PGW-C may transmit a PDU Session Update SM Context Response to the AMF. This response may include information indicating that UE Policy Association has been successfully transferred to the SM-PCF.

1316: The HSS+UDM may transmit Update Location Ack to the MME.

1317: The MME may transmit TAU Accept to the UE.

1318: The UE may transmit TAU Complete to the MME.

1319: When necessary, a dedicated bearer setup initiated by the PGW may be performed.

1320: The SMF+PGW-C may transmit an Update Bearer Request. When receiving the UE policy container from the UE-PCF (this may include receiving the UE policy container from the SM-PCF in operations 1310f and 1310h), the SMF+PGW-C may provide ePCO (or PCO) including the UE policy container to the SGW. When receiving the Policy Control Request Triggers for UE Policy Association from the UE-PCF, the SMF+PGW-C may transfer the Policy Control Request Triggers for UE Policy Association to the SGW.

1321: The SGW may transfer the ePCO (or PCO) including the UE policy container received from the SMF+PGW-C and/or the Policy Control Request Triggers for UE Policy Association to the MME. Here, the ePCO (or PCO) and/or the Policy Control Request Triggers for UE Policy Association may be transferred through the Update Bearer Request. When receiving the Policy Control Request Trigger(s) of UE Policy Association, the MME may modify the Policy Control Request Trigger(s) of UE Policy Association that the MME already has, by using the received Policy Control Request Trigger(s) of UE Policy Association.

1322: The MME may transfer the ePCO (or PCO) including the UE policy container received from the SGW to the E-UTRAN. In this case, a downlink NAS transport request may be used.

1323: The E-UTRAN may transfer the ePCO (or PCO) including the UE policy container received from the MME to the UE. In this case, direct transfer may be used.

1323a: The UE may perform operations required for processing of a UE Policy (which may include URSP), based on the information included in the UE policy container received from the UE-PCF. More specifically, the UE may store a URSP or update an existing URSP.

1324: The UE may include UE Policy-related information to be provided to the UE-PCF in the UE policy container and then include the UE policy container in the ePCO (or PCO) to provide the same to the E-UTRAN. In this case, direct transfer may be used.

1325: The E-UTRAN may transfer the ePCO (or PCO) including the UE policy container received from the UE to the MME. In this case, uplink NAS transfer may be used.

1326: The MME may transfer the ePCO (or PCO) including the UE policy container received from the E-UTRAN to the SGW. In this case, an Update Bearer Response may be used.

1327: The SGW may transfer the ePCO (or PCO) including the UE policy container received from the MME to the SMF+PGW-C. In this case, the Update Bearer Response may be used.

1328: The SMF+PGW-C may transfer the ePCO (or PCO) including the UE policy container received from the SGW to the SM-PCF. In this case, an SM Policy Control Update Request may be used.

1329: The SM-PCF may transfer the ePCO (or PCO) including the UE policy container received from the SMF+PGW-C to the UE-PCF. In this case, the UE Policy Control Update Request may be used.

1330: The UE-PCF may transmit a UE Policy Control Update Response to the SM-PCF.

1331: The SM-PCF may transmit an SM Policy Control Update Response to the SMF+PGW-C.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. Therefore, the scope of various embodiments of the disclosure should be construed to include, in addition to the embodiments set forth herein, all changes and modifications derived based on the technical idea of various embodiments of the disclosure. Also, the above respective embodiments may be employed in combination, as necessary.

## Claims

1. A method performed by a first network entity that performs a session management function (SMF) and a packet data network gateway-control plane function (PGW-C) in a mobile communication system, the method comprising:
acquiring, from a user equipment (UE), an indicator indicating a UE route selection policy (URSP) provisioning support in an evolved packet system (EPS);
transmitting, based on the indicator, a session management (SM) policy control update request message to a second network entity that performs a policy control function (PCF) related to a session; and
receiving, from the second network entity, an SM policy control update response message including URSP information generated by a third network entity that performs a PCF related to the UE.

2. The method of claim 1, wherein the SM policy control update request message includes policy association identifier information and information on a policy control request trigger condition that is met.

3. The method of claim 1, wherein the URSP information is included in a UE policy container within the SM policy control update response message.

4. The method of claim 1, wherein the URSP information is used in the EPS in case that the UE moves from a 5th generation system (5GS) to the EPS.

5. A method performed by a second network entity that performs a policy control function (PCF) related to a session in a mobile communication system, the method comprising:
receiving a session management (SM) policy control update request message from a first network entity that performs a session management function (SMF) and a packet data network gateway-control plane function (PGW-C);
in case that a user equipment (UE) route selection policy (URSP) provisioning is supported in an evolved packet system (EPS), establishing a UE policy association with a third network entity that performs a PCF related to the UE; and
transmitting, to the first network entity, an SM policy control update response message including URSP information generated by the third network entity.

6. The method of claim 5, wherein the SM policy control update request message includes policy association identifier information and information on a policy control request trigger condition that is met.

7. The method of claim 5, wherein the URSP information is included in a UE policy container within the SM policy control update response message.

8. The method of claim 5, wherein the URSP information is used in the EPS in case that the UE moves from a 5th generation system (5GS) to the EPS.

9. A first network entity that performs a session management function (SMF) and a packet data network gateway-control plane function (PGW-C) in a mobile communication system, the first network entity comprising:
a transceiver; and
a controller coupled to the transceiver,
wherein the controller is configured to:
acquire, from a user equipment (UE), an indicator indicating a UE route selection policy (URSP) provisioning support in an evolved packet system (EPS),
control the transceiver to transmit, based on the indicator, a session management (SM) policy control update request message to a second network entity that performs a policy control function (PCF) related to a session, and
control the transceiver to receive, from the second network entity, an SM policy control update response message including URSP information generated by a third network entity that performs a PCF related to the UE.

10. The first network entity of claim 9, wherein the SM policy control update request message includes policy association identifier information and information on a policy control request trigger condition that is met.

11. The first network entity of claim 9, wherein the URSP information is included within a UE policy container in the SM policy control update response message.

12. The first network entity of claim 9, wherein the URSP information is used in the EPS in case that the UE moves from s 5th generation system (5GS) to the EPS.

13. A second network entity that performs a policy control function (PCF) related to a session in a mobile communication system, the second network entity comprising:
a transceiver; and
a controller coupled to the transceiver,
wherein the controller is configured to:
control the transceiver to receive a session management (SM) policy control update request message from a first network entity that performs a session management function (SMF) and a packet data network gateway-control plane function (PGW-C),
in case that a user equipment (UE) route selection policy (URSP) provisioning is supported in an evolved packet system (EPS), establish a UE policy association with a third network entity that performs a PCF related to the UE, and
control the transceiver to transmit, to the first network entity, an SM policy control update response message including URSP information generated by the third network entity.

14. The second network entity of claim 13, wherein the SM policy control update request message comprises policy association identifier information and information on a satisfied policy control request trigger condition.

15. The second network entity of claim 13, wherein the URSP information is included in a UE policy container within the SM policy control update response message, and is used in the EPS in case that the UE moves from a 5th generation system (5GS) to the EPS.
